(19)

**Europäisches Patentamt**

**European Patent Office**

**Office européen des brevets**

(11) **EP 4 572 515 A1**

(12) **EUROPEAN PATENT APPLICATION**

(43) Date of publication:
18.06.2025 Bulletin 2025/25

(21) Application number: 23215711.5

(22) Date of filing: 12.12.2023

(51) International Patent Classification (IPC):
*H04W 74/0833* $^{(2024.01)}$   *H04L 5/00* $^{(2006.01)}$
*H04B 7/06* $^{(2006.01)}$

(52) Cooperative Patent Classification (CPC):
**H04W 74/0833;** H04B 7/0695; H04L 5/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **MASO, Marco**
  **Issy les Moulineaux (FR)**
• **MARCONE, Alessio**
  **Munich (DE)**
• **NHAN, Nhat-Quang**
  **Reims (FR)**

(74) Representative: **Nokia EPO representatives**
**Nokia Technologies Oy**
**Karakaari 7**
**02610 Espoo (FI)**

(54) **DETERMINING RACH OCCASION GROUPS FOR TRANSMITTING MULTIPLE PREAMBLES WITH DIFFERENT TRANSMIT BEAM CONFIGURATIONS AND USING THE SAME**

(57)     Based on determining at a UE that at least a time offset between any two consecutive first valid physical random-access channel occasions of any two consecutive sets of physical random-access channel occasions per time period is configured, wherein sets of physical random-access channel occasions are for performing multiple transmissions of preamble(s) for a RACH with a same transmission beam, performing at least the following: determining set(s) of physical random-access channel occasions per time period, wherein the set(s) are for performing multiple transmissions of preamble(s) for a RACH with different transmission beams and wherein the set(s) are different from any set(s) for performing multiple transmissions of preamble(s) for a RACH with the same transmission beam in the time period; selecting a set from the set(s) of physical random-access channel occasions per time period; and performing multiple transmissions of preamble(s) for a RACH with different transmission beams on the selected set.

EP 4 572 515 A1

**Description**

TECHNICAL FIELD

Examples of embodiments herein relate generally to wireless communications and, more specifically, relate to RACH (random access channel) procedures.

BACKGROUND

A random-access procedure is performed by a UE (user equipment, a wireless, typically mobile device) to begin access to a cellular network. This procedure is performed using at least a random-access channel (RACH), and it involves the UE sending a preamble to the network (e.g., to a gNB, which is a base station for fifth generation, 5G). The UE can perform the preamble transmission during RACH occasions (ROs), which have a certain configuration, resulting in certain time periods for determining RO sets to be used for transmitting at least one PRACH preamble.

One complexity that affects this is when there are multiple transmit beams from the UE to the gNB. That is, the UE may have the ability to transmit on multiple beams, and this would affect the RACH process and corresponding parameters, such as preambles, occasions, and more.

BRIEF SUMMARY

This section is intended to include examples and is not intended to be limiting.

In an exemplary embodiment, a method is disclosed that includes based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

An exemplary computer program product includes a computer-readable storage medium bearing instructions that, when executed by an apparatus, cause the apparatus to perform at least the following: based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

In another exemplary embodiment, an apparatus comprises means for performing: based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

In an exemplary embodiment, a method is disclosed that includes based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

An exemplary computer program product includes a computer-readable storage medium bearing instructions that, when executed by an apparatus, cause the apparatus to perform at least the following: based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

In another exemplary embodiment, an apparatus comprises means for performing: based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

BRIEF DESCRIPTION OF THE DRAWINGS

In the attached drawings:

FIG. 1 is a signaling diagram illustrating a 4-step RACH procedure;
FIG. 2 is an example of time-domain resource determination for RACH occasions;
FIG. 3 is an example of SSB to RO mapping with *prach-ConfigurationIndex* 251 and UL/DL configuration DDDSU;
FIG. 4 illustrates how RO set determination in case time offset is configured when RO set size = 4;
FIGS. 5, 6, 7, and 8 are flow diagrams of different methods for determining RACH occasion groups for transmitting multiple preambles with different transmit beam configurations;
FIG. 9 is a flow diagram of a method for an Embodiment A;
FIG. 10 illustrates RO set determination for multiple PRACH transmissions with different Tx beams, when Rel-18 time offset = 8 is configured;
FIG. 11 illustrates RO set determination for multiple PRACH transmissions with different Tx beams, when Rel-18 time offset = 12 is configured;
FIG. 12 is a flow diagram of a method for an Embodiment B;
FIG. 13 illustrates RO set determination for multiple PRACH transmissions with different Tx beams using Rel-18 time offset, when Rel-18 time offset = 12 is configured;
FIG. 14 is a flow diagram of a method for an Embodiment C;
FIG. 15 illustrates RO set determination for multiple PRACH transmissions with different Tx beams using non-consecutive ROs;
FIG. 16 is a flow diagram of a method for an Embodiment D;

FIG. 17 illustrates RO set determination for multiple PRACH transmissions with different Tx beams using frequency offset;

FIG. 18 illustrates RO set determination for multiple PRACH transmissions with different Tx beams using frequency offset and Rel-18 time offset, when Rel-18 time offset = 6 is configured;

FIG. 19 illustrates RO set determination for multiple PRACH transmissions with different Tx beams using frequency offset and using non-consecutive ROs; and

FIG. 20 is a block diagram of one possible and non-limiting exemplary system in which the exemplary embodiments may be practiced.

DETAILED DESCRIPTION OF THE DRAWINGS

Abbreviations that may be found in the specification and/or the drawing figures are defined below, at the end of the detailed description section.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

When more than one drawing reference numeral, word, or acronym is used within this description with "/", and in general as used within this description, the "/" may be interpreted as "or", "and", or "both". As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

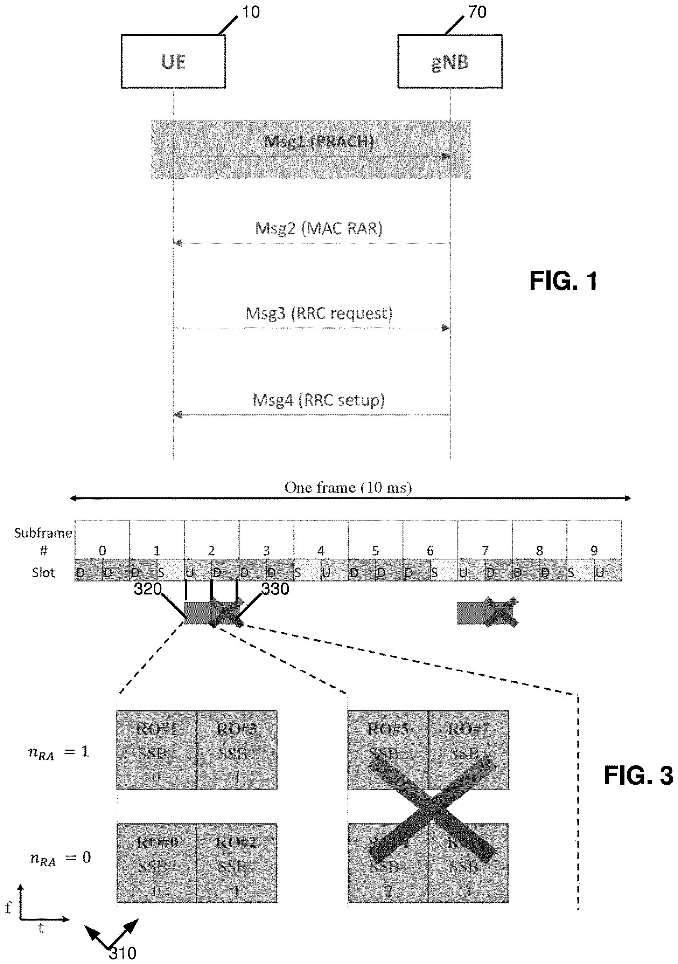

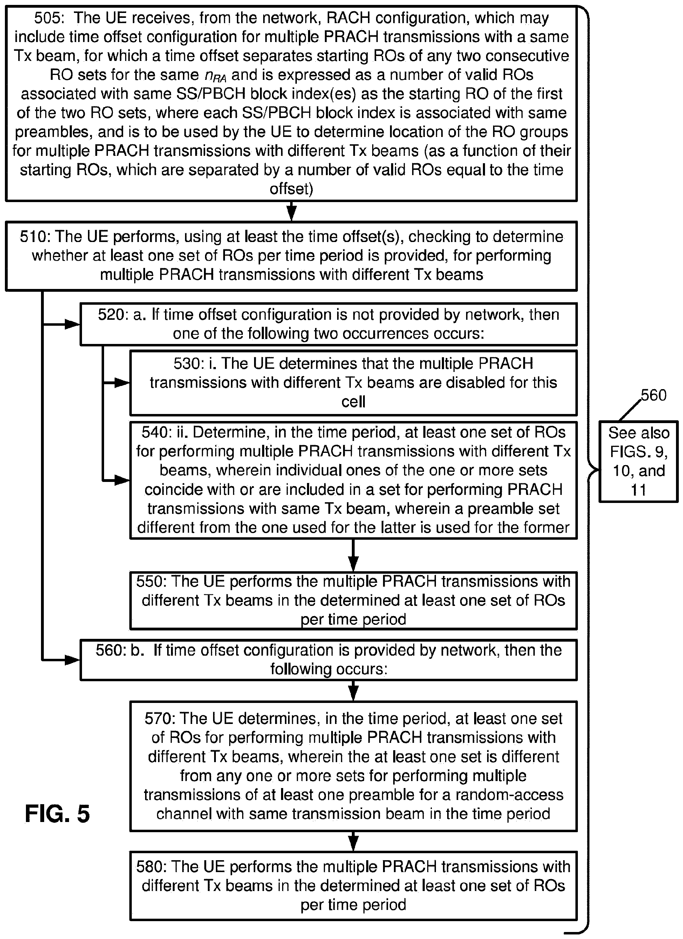

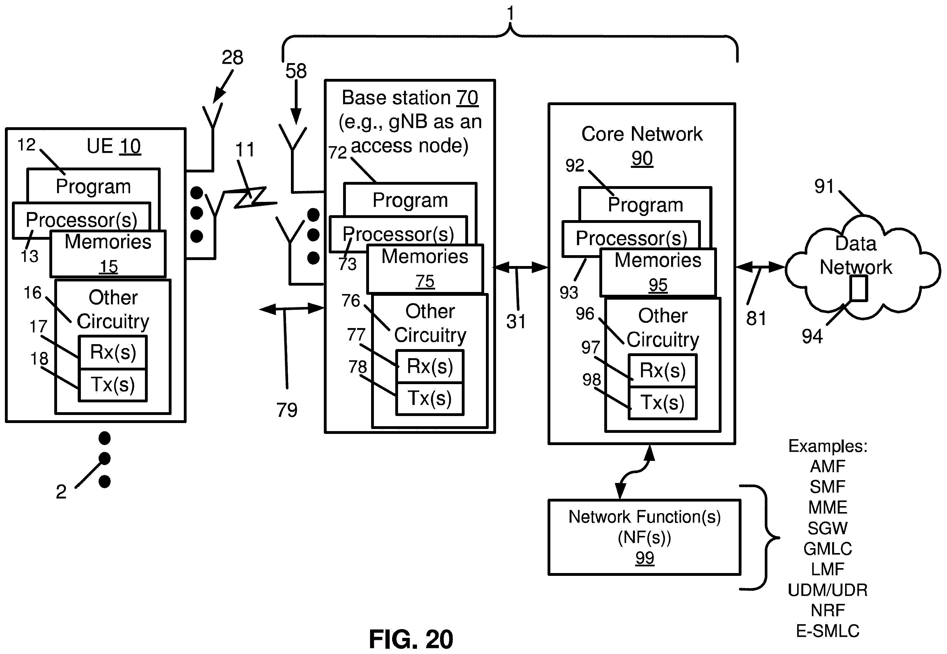

Any flow diagram (e.g., FIGS. 5 to 9, 12, 14, and 16) or signaling diagram (e.g., FIG. 1) herein is considered to be a logic flow diagram, and illustrates the operation of an exemplary method, results of execution of computer program instructions embodied on a computer readable memory, functions performed by logic implemented in hardware, and/or interconnected means for performing functions in accordance with an exemplary embodiment. Block diagrams (such as FIG. 20) also illustrate the operation of an exemplary method, results of execution of computer program instructions embodied on a computer readable memory, functions performed by logic implemented in hardware, and/or interconnected means for performing functions in accordance with an exemplary embodiment. For methods, flow diagrams, and signaling diagrams, the orders of method steps, blocks in the flow, or signaling are not critical and instead are examples.

The examples presented below relate in part to multiple technical areas. These technical areas are described now, prior to exposition of the examples.

One technical area of interest is the random-access procedure. In 5G NR, two contention based random access (CBRA) procedures are supported, namely 4-step RACH (Rel-15) and 2-step RACH (Rel-16). In this document, the former is emphasized for illustration purposes and simplicity, but the proposed concept is equally applicable to the latter.

As shown in FIG. 1, which illustrates a signaling diagram between a UE 10 and a gNB 70, a 4-step RACH procedure can be summarized as follows:

1. Msg1 (a.k.a. PRACH): The UE sends a specific preamble to the gNB via physical random-access channel (PRACH) using a specific resource called RACH occasion (RO) or PRACH occasion.

2. Msg2 (a.k.a. RAR): The gNB replies with a random-access response (RAR) message, which includes the detected preamble ID, the time-advance command, a TC-RNTI, and UL grant for the transmission of Msg3 on PUSCH.

3. Msg3 (a.k.a. RRC request): The UE responds to Msg2 over the scheduled PUSCH with an ID for contention resolution.

4. Msg4 (a.k.a. RRC setup): The gNB transmits the contention resolution message with the contention-resolution ID.

Upon reception of Msg4, the UE sends (not shown) an ACK on a PUCCH if its contention-resolution ID is carried by Msg4. This completes the 4-step RACH. It is worth noting that prior to Msg1, there is also a preliminary step of sending and receiving the synchronization signal block (SSB), i.e., DL beam sweeping, which is not formally part of the RACH procedure. As a result of this preliminary step, the UE selects the index of the preferred SSB beam and decodes the associated PBCH for MIB, SIB and so on. This index is also used by UE to identify a suitable RO for the preamble transmission (Msg1), according to the SSB-to-RO mapping implicitly conveyed by SIB1.

It is noted that 2 step RACH is similar to 4 step RACH presented above, but Msg1 and Msg3 are combined in a MsgA and sent out without waiting for feedback from the UE in between (traditionally Msg2). Similarly, the gNB combines Msg2 and Msg4 into MsgB. It is straightforward to apply the solutions disclosed in this invention for Msg1, to the preamble/Msg1 part of MsgA.

Configuration of RACH occasions (ROs) is now described. In the time domain, the time-domain resource for RACH occasions (ROs) is RRC configured by *prach-ConfigurationIndex* (in *rach-ConfigGeneric*), which acts as an indicator to a row of a table specified in 3GPP TS 38.211 (clause 6.3.3.2). With the parameters indicated by *prach-ConfigurationIndex,* the UE determines the preamble format for PRACH and applies the procedure specified in 3GPP TS 38.211 (clause 5.3.2) to find the ROs in the time-domain.

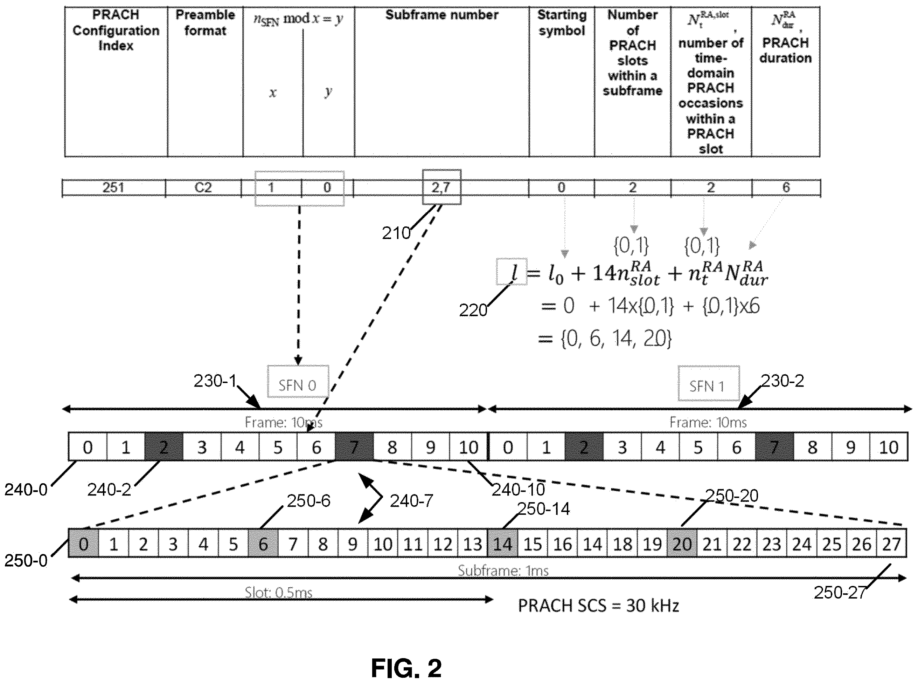

FIG. 2 illustrates an example of time-domain resource determination for RACH occasions, wherein the *prach-ConfigurationIndex* is 251. In this example, the subframe numbers 210 are 2 and 7, which are shown highlighted in the first and second frames 230-1 and 230-2. The calculations for *l* 220 result in a set of symbols {0, 6, 14, 20}, and these are highlighted in subframe 240-7, which is subframe 7 in this example. Each frame 230 has subframes 240-0 through 240-10, and subframe 240-7 is shown with symbols 250-0 through 250-27. With the index of 251 indicated, the UE determines the following:

1) Preamble format C2 should be used.
2) ROs are allocated at the system frame numbers ($n_{SFN}$) that satisfy $n_{SFN}$ mod 1 = 0 (i.e., all SFN numbers are valid).
3) Within each of the determined SFNs, ROs are allocated at subframe numbers 2 and 7 (see subframe numbers 210).
4) Within each of the determined subframes 240-2 and 240-7, the remaining parameters in the considered row indicate that ROs will start at symbol numbers 0, 6, 14, 20, which are shown as 250-0, 250-6, 250-14, and 250-20. The symbol number is continuously counted regardless of the number of slots within the subframe, which depends on the sub-carrier spacing configured for PRACH.
5) ROs duration is 6 symbols (although the actual duration of the preamble format can be less than that).

Finally, the validity of the determined ROs should be checked. According to 3GPP TS 38.213 (clause 8.1) an RO is determined as valid, if it is within UL symbols (e.g., U) or if it has a sufficient gap after the last SSB/DL symbol in case it is within flexible symbols (e.g., S).

In the frequency domain, the parameters *msg1-FrequencyStart* and *msg1-FDM* configured in *RACH-Config-Generic* indicate the offset of the lowest RO in frequency domain from the start of the UE uplink bandwidth part and the number of ROs multiplexed in frequency domain for each time instance, respectively. Such ROs are indexed as $n_{RA}$ = {0,1, ... , *M* - 1}, where *M* equals the higher-layer parameter *msg1-FDM,* and are numbered in increasing order within the UE uplink bandwidth part, starting from the lowest frequency. An example of such mapping is also shown in FIG. 3, in the case of msg1-FDM = 2. Reference 310 indicates this is a time-frequency resource space. Time is on the horizontal axis and frequency is on the vertical axis.

FIG. 3 is an example of SSB to RO mapping with *prach-ConfigurationIndex* 251 and UL/DL configuration DDDSU, where D= DL, S=Special, and U=UL. The X marks indicate these ROs do not satisfy the constraints for them to be valid ROs as per specification. More precisely, they would occur over a D slot 330 (instead of a U slot 320) which, by definition, is for downlink transmission. It is noted that that this due to the fact that validity constraints are defined irrespective of the slot format (which can be dynamically configured by the network), hence a UE may always find invalid ROs even when applying perfectly valid PRACH configuration indices, and the same PRACH configuration index results in a number of invalid ROs that depends on the underlying slot format.

The number of occupied resource blocks per RO, expressed in number of RBs for PUSCH, is specified in Section 6.3.3.2 of 3GPP TS 38.211, depending on the configured preamble length and sub-carrier spacings for PRACH and PUSCH.

Another topic of interest concerns SSB to RO mapping. The mapping of SSB indexes to the determined ROs is fundamental for a UE to understand which ROs are associated to the SSB index selected during the preliminary step before the start of the RACH procedure. The different SSB indexes are beamformed in different directions in the cell, hence selection of an incorrect SSB index may entail failure of the RACH procedure.

To this purpose, one fundamental parameter *ssb-perRACH-OccasionAndCB-PreamblesPerSSB* is configured in *RACH-ConfigCommon* and indicates two information: (i) the number of SSB indexes per RO and (ii) the number of contention-based preambles per SSB index. More precisely, for Type-1 random access procedure, a UE is provided a number N of SS/PBCH block (SSB) indexes associated with one PRACH occasion and a number R of contention-based preambles per SS/PBCH block index per valid PRACH occasion by *ssb-perRACH-OccasionAndCB-PreamblesPerSSB.* Once this information is available to a UE, the UE maps the SSB indexes to the time-frequency grid of ROs (determined as described above) in increasing order of frequency resource indices of frequency multiplexed ROs, i.e., $n_{RA}$ time resource indices of the ROs within a PRACH slots, and the PRACH slots, sequentially.

FIG. 3 illustrates an example of valid ROs in one frame determined as illustrated in FIG. 2, and further assumes the following additional configuration: DDDSU slot structure, *Msg1-FDM* = two, and *ssb-perRACH-OccasionAndCB-PreamblesPerSSB* is one-half. Based on the configuration, two ROs are multiplexed in the frequency domain (*Msg1-FDM* = two) and any two FDM'd ROs are mapped to the same SSB index (*ssb-perRACH OccasionAndCB-PreamblesPerSSB* = 1/2).

In relation to the SSB-to-RO mapping, 3GPP TS 38.213 defines an association period, starting from frame 0, for mapping SSB indexes to PRACH occasions (i.e., ROs) as the smallest value in the set determined by the PRACH configuration period according to Table 8.1-1 (shown below) such that all of the SSB indexes are mapped at least once to the PRACH occasions within the association period. The PRACH configuration period referred to here is determined at the UE based on the configured PRACH configuration index.

In other words, an association period is a period of time wherein all SSB indexes are mapped to at least one RO. An association pattern period is also defined in 3GPP TS 38.213, as a time duration which includes one or more association periods and is determined so that a pattern between PRACH occasions and SS/PBCH block indexes repeats at most every 160 msec.

**Table 8.1-1: Mapping between PRACH configuration period and SS/PBCH block to PRACH occasion association period**

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

A further topic of interest is determination of preambles for PRACH transmissions. Determination of the preambles to be used for PRACH transmissions in ROs mapped to certain SSB indexes is based on network configuration of two main relevant parameters: *ssb-perRACH-OccasionAndCB-PreamblesPerSSB* and *totalNumberOfRA-Preambles.* More specifically, for Type-1 random access procedure, a UE is provided a number $N$ of SSB indexes associated with one PRACH occasion (RO) and a number R of contention-based preambles per SSB index per valid PRACH occasion by ssb-perRACH-OccasionAndCB-PreamblesPerSSB and a total number of preambles $N_{preamble}^{total}$ by *totalNumberOfRA-Preambles.*

For Type-1 random access procedure, or for Type-2 random access procedure with separate configuration of PRACH occasions from Type 1 random access procedure, if $N < 1$, one SS/PBCH block index is mapped to $1/N$ consecutive valid PRACH occasions and R contention-based preambles with consecutive indexes associated with the SS/PBCH block index per valid PRACH occasion start from preamble index 0. If $N \geq 1$, R contention-based preambles with consecutive indexes associated with SS/PBCH block index n, $0 \leq n \leq N - 1$, per valid PRACH occasion start from preamble index $n \cdot N_{preamble}^{total}/N$, wherein $N_{preamble}^{total}$ is an integer multiple of $N$.

In the context of 3GPP Rel-18, PRACH repetitions are specified to be performed over a group of ROs, determined by UE according to both specific rules and configuration received by gNB, referred to in the specification as RO set.

In other words, for multiple PRACH transmissions with same Tx beam, an RO set is assumed to be used, and one RO set consists of valid RO(s) for a specific number of multiple PRACH transmissions, also referred to as PRACH repetitions. A further relevant quantity is defined in the specification as *time period,* given by an integer number of association pattern periods, as per definition given in 3GPP TS 38.213, such that at least one RO set can be found, for each configured supported number of repetitions in the cell. For instance, if two supported numbers of repetitions are configured in the cell, e.g., N and M, the time period is defined as a the time duration of the integer number of association pattern periods such that at least one RO set with N ROs and at least one RO set with M ROs can be found within the time period itself.

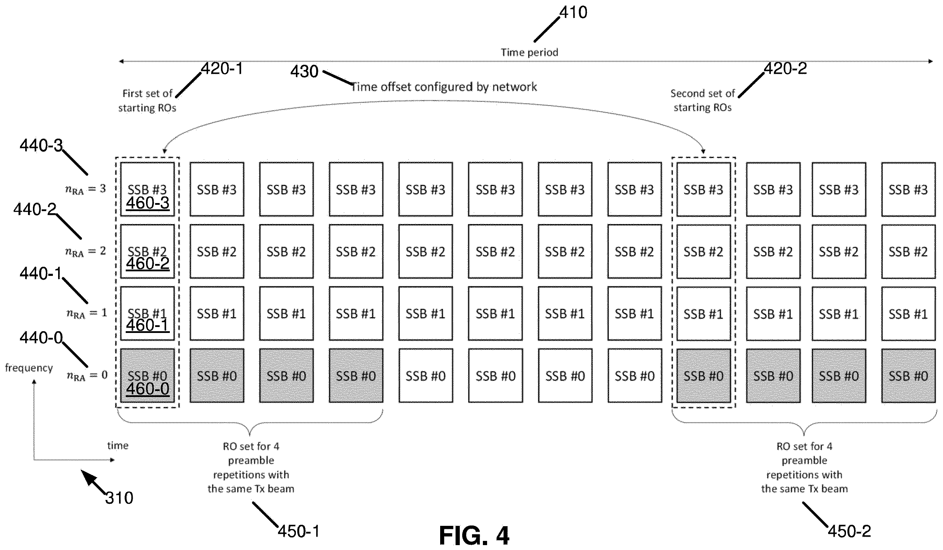

RO sets within a time period can only consist of ROs sharing the same frequency resource indices of frequency multiplexed ROs, i.e., $n_{RA}$, and the starting ROs of any two consecutive sets for the same $n_{RA}$, may be separated by a time offset expressed as a number of valid ROs associated with same one or more synchronization signal block (SSB) index(es) as the starting RO of the first of the two RO sets, and each synchronization signal block index is associated with same preamble indexes, which can be configured per-cell by gNB via higher-layer parameter *TimeOffsetBetweenStartingRO-r18.* FIG. 4 provides an example showing 2 RO sets of size 4 ROs in a time period 410, whereby the starting ROs (belonging to the sets 420 of starting ROs) of the two RO sets 450 are not separated by 4 valid ROs (which would be the case, if no time offset was configured) but rather by 8 ROs (one of the supported values for the parameter *TimeOffsetBetweenStartingRO-r18* in case of RO sets for 4 repetitions).

In more detail, FIG. 4 shows a time period 410 and uses a time-frequency resource space 310. The frequency space is divided into $n_{RA}$ = 0 illustrated by reference 440-0 and corresponding to SSB #0 460-0; $n_{RA}$ = 1 illustrated by reference 440-1 and corresponding to SSB #1 460-1; $n_{RA}$ = 2 illustrated by reference 440-2 and corresponding to SSB #2 460-2; and $n_{RA}$ = 3 illustrated by reference 440-3 and corresponding to SSB #3 460-3. The first set 420-1 of starting ROs are illustrated, and the second set 420-2 of ROs are located in time based on the time offset 430 (configured by the network in this example). There are two RO sets 450-1 and 450-2, both with four (4) PRACH repetitions, and the first and second sets 420-1 and 420- 2 of ROs are separated by 8 ROs.

Now that technical areas have been described, examples of problems in these technical areas are described. RO sets are defined in gNB Rel-18 for PRACH repetitions with a same Tx beam configuration across multiple PRACH transmissions to allow a gNB to know with certainty on which ROs a UE is transmitting multiple PRACH transmissions and to be able to blindly combine the multiple PRACH transmissions. RO sets may have different sizes and may be separated in the time domain by a number of valid ROs associated with the same synchronization signal block (SSB) index as the starting ROs of the RO sets, where each synchronization signal block index is associated with the same preambles, which depends on the so-called time offset 430. More precisely, the time offset 430 provides the number of valid ROs associated with the same synchronization signal block index, where each synchronization signal block index is associated with the same preambles, which separate the two consecutive starting ROs of any two consecutive RO sets within a time period.

However, what this framework does not define is how RO sets for multiple PRACH transmissions with different Tx beam configurations used across the multiple PRACH transmission can be determined. The examples herein focus on providing techniques for UE determination of RO sets for multiple PRACH transmissions with different Tx beam configurations used across the multiple PRACH transmissions, with minimal signaling optimizations.

Before proceeding with an overview of the examples, it is noted that the expression "RO set of size N" and the expression "the N ROs over which the UE can perform N PRACH transmissions" are used interchangeably herein. The first expression is mainly used herein, for simplicity, but the two expressions are to be considered as identical in meaning.

In this document, techniques are presented for UE determination of RO sets for multiple PRACH transmissions with different Tx beam configurations used across the multiple PRACH transmissions, with minimal signaling optimizations. That is, embodiments herein may or may not include signaling optimization. If no optimization is introduced, this is because the example is related to the re-interpretation of the existing signaling. It is noted that optimizations include using and/or creating new signaling, as compared with reusing existing signaling for different purposes, e.g., via the re-interpretation of the existing signaling.

It is proposed in examples to reuse the existing signaling framework for indicating whether a time offset is configured to increase the time gap between the starting ROs of two consecutive RO sets, where new interpretation of the signaling is disclosed, by means of which UE can determine the corresponding RO sets. Suitable signaling optimizations are also introduced to increase the flexibility of the method and provide a more powerful tool to configure resources for multiple PRACH repetitions.

Examples of techniques and corresponding methods include the following. The methods disclosed henceforth are performed by the UE, and the actions performed by the UE depend on received signaling.

FIGS. 5, 6, 7, and 8 are flow diagrams of different methods for determining RACH occasion groups for transmitting multiple preambles with different transmit beam configurations. These figures highlight four different methods.

Method 1 is described in FIG. 5 and is as follows. The UE receives RACH configuration, from the network, which may include time offset configuration for multiple PRACH transmissions with a same Tx beam, for which time offset separates the starting ROs of any two consecutive RO sets for the same $n_{RA}$ and is expressed as a number of valid ROs associated with same SS/PBCH block index(es) as the starting RO of the first of the two RO sets, where each SS/PBCH block index is associated with same preambles, and is to be used by the UE to determine the location of the RO sets for multiple PRACH transmissions with different Tx beams (as a function of their starting ROs, which are separated by a number of valid ROs associated with same SS/PBCH block index(es) as the starting RO of the first of the two RO sets, where each SS/PBCH block index is associated with same preambles, equal to the time offset). See block 505.

A UE performs checking whether time offset configuration is provided by network. See block 510. If the checking determines at least one set of ROs per time period is provided, for performing multiple PRACH transmissions with different Tx beams, then the UE may reuse existing signaling framework thanks to a new interpretation. The new interpretation means that no new signaling is introduced and, instead, existing signaling is interpreted differently by the UE capable of performing multiple PRACH transmissions with different Tx beams, to determine the relevant quantities for the application (e.g., the PRACH repetitions with different Tx beams).

a. See block 520. If time offset configuration is not provided by network, then one of the following two consequences occurs:

i. See block 530. UE determines that the multiple PRACH transmissions with different Tx beams are disabled for this cell. The UE may subsequently disable the multiple PRACH transmissions with different Tx beams for this cell.

ii. See block 540. The UE determines, in the time period, at least one set of ROs for performing multiple PRACH transmissions with different Tx beams, wherein individual ones of the one or more sets coincide with or are included in a set for performing PRACH transmissions with same Tx beam, and wherein a preamble set different from the one used for the latter transmission is used for the former. It is noted that at least this block is where the UE may reuse existing signaling framework thanks to a new interpretation.

The UE performs the multiple PRACH transmissions with different Tx beams in the determined at least one set of ROs per time period. See block 550.

b. See block 560: If time offset configuration is provided by network, then the following occurs:

See block 570: The UE determines, in the time period, at least one set of ROs for performing multiple PRACH transmissions with different Tx beams, wherein the at least one set is different from any one or more sets for performing multiple transmissions of at least one preamble for a random-access channel with same transmission beam in the time period.

See block 580: The UE performs the multiple PRACH transmissions with different Tx beams in the determined at least one set of ROs per time period.

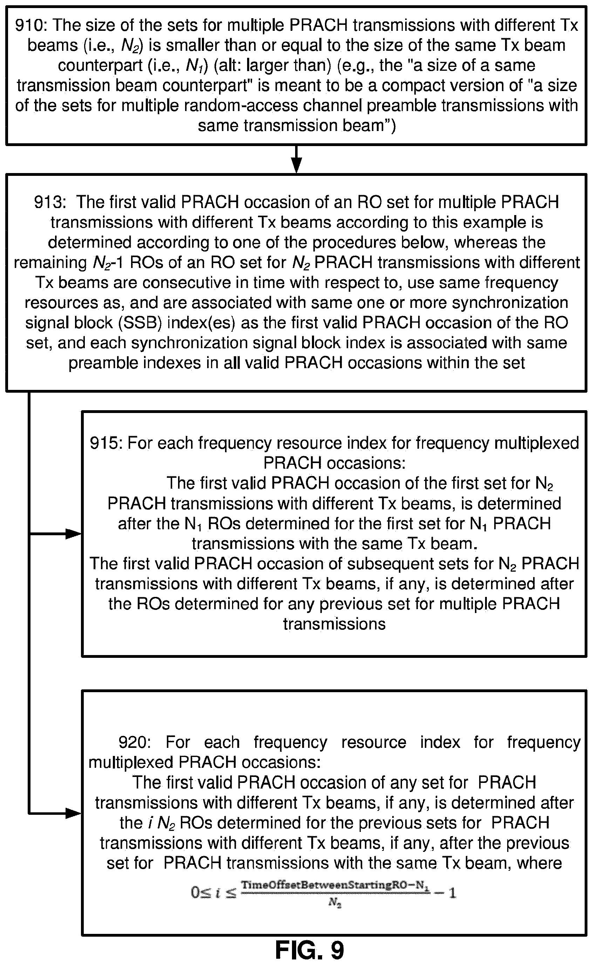

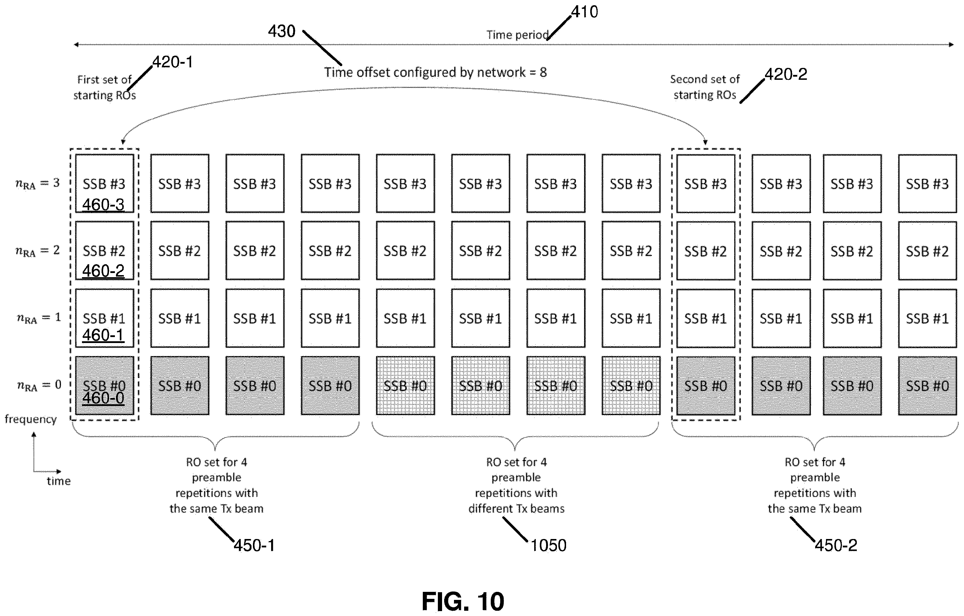

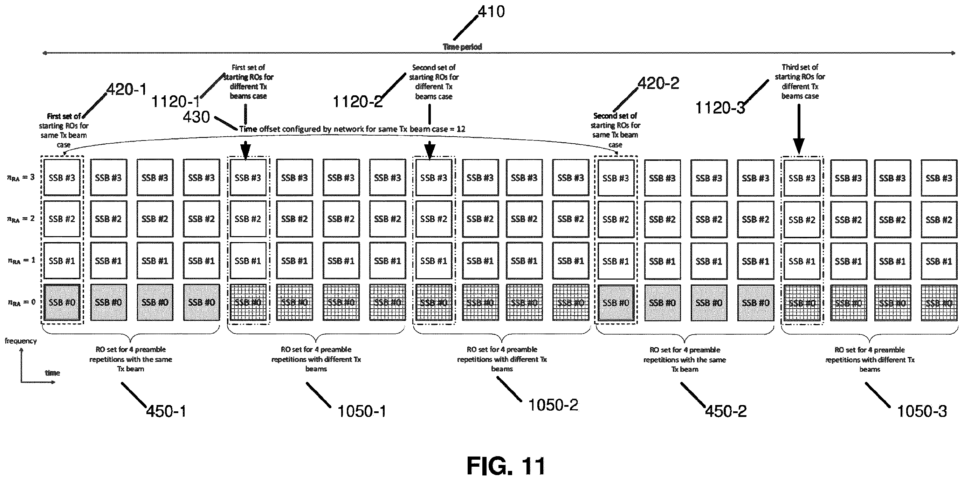

In further detail, after receiving the RACH configuration, a UE configured according to these examples will check whether time offset configuration is provided by the network. If such configuration is provided, the UE will operate according to FIG 10 described below, i.e., the UE will know (i) where the RO sets for PRACH repetitions with same Tx beam are located within the time period, (ii) that PRACH repetitions with different Tx beams are also enabled in the cell (an option in FIG. 10 and FIG. 11, described below, since the time offset as per 3GPP Rel-18 is configured by the NW), and (ii) the location of the RO sets for PRACH repetitions with different Tx beams. Method 1 is also described below as Embodiment A, which is also described by FIGS. 9, 10, and 11. See block 560.

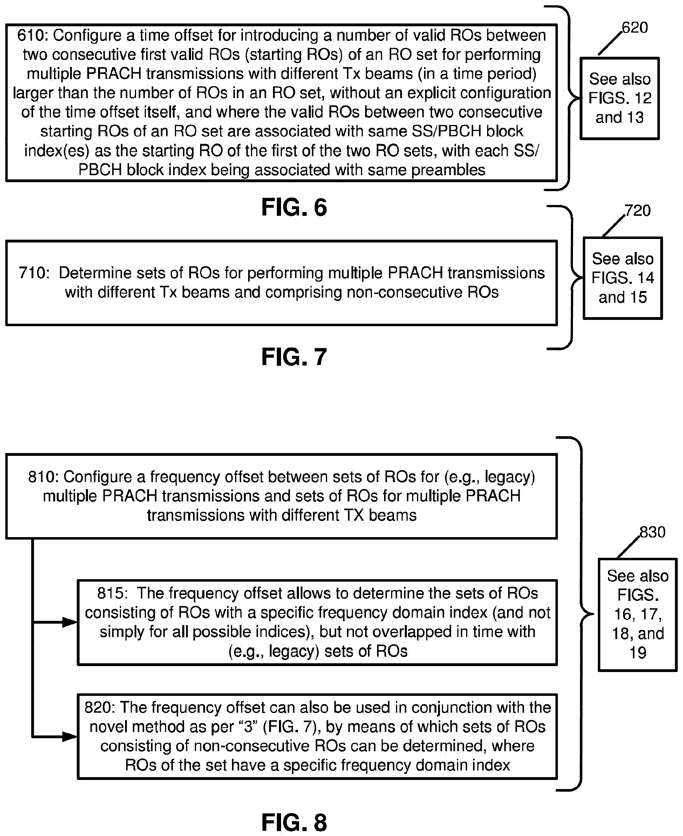

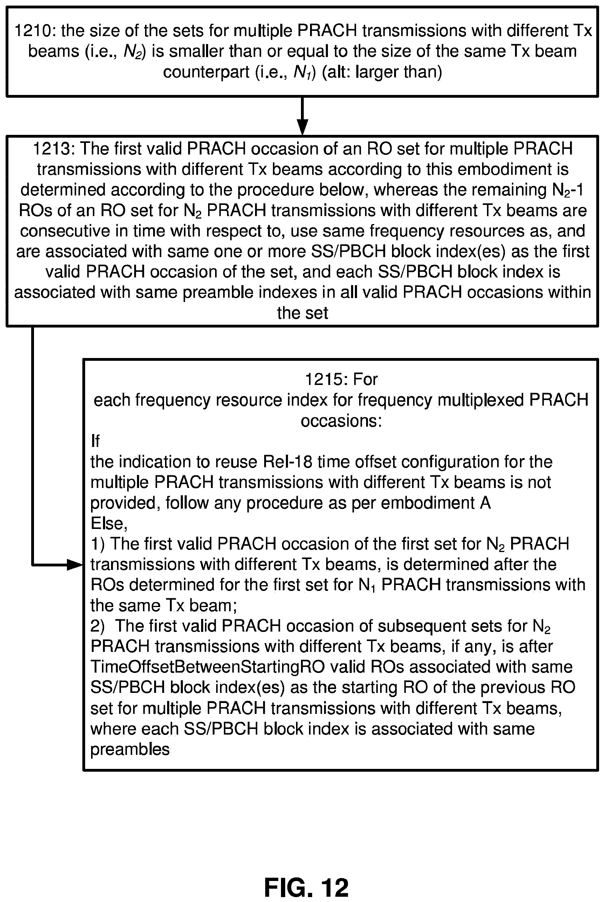

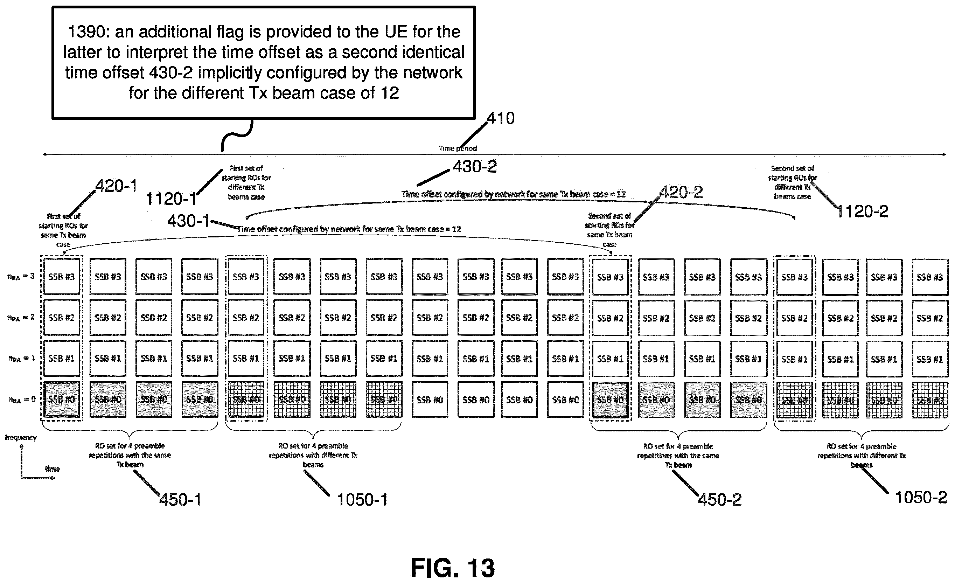

Method 2 is described in FIG. 6 and is as follows. In this method, configuring a time offset is performed for introducing a number of valid ROs between two consecutive first valid ROs (starting ROs) of an RO set for performing multiple PRACH transmissions with different Tx beams (in a time period) larger than the number of ROs in an RO set, without an explicit configuration of the time offset itself, and where the valid ROs between two consecutive starting ROs of an RO set are associated with same SS/PBCH block index(es) as the starting RO of the first of the two RO sets, with each SS/PBCH block index being associated with same preambles. See block 610. This is described below as Embodiment B, and is described also by FIGS. 12 and 13. See block 620.

Furthermore, Method 2 may be thought of as alternative to Method 1, wherein Method 2 still does not require additional signaling over Rel-18 signaling and is based on a new interpretation of the existing signaling. However, differently from Method 1, herein the ROs constituting an RO set can be non-consecutive. In other words, ROs for PRACH reps with same beam would exist between ROs for PRACH reps with different Tx beams that are part of the same RO set for different Tx beams.

Method 3 is described in FIG. 7 and is as follows. FIG. 7 includes a method for determining sets of ROs for performing multiple PRACH transmissions with different Tx beams and comprising non-consecutive ROs. See block 710.

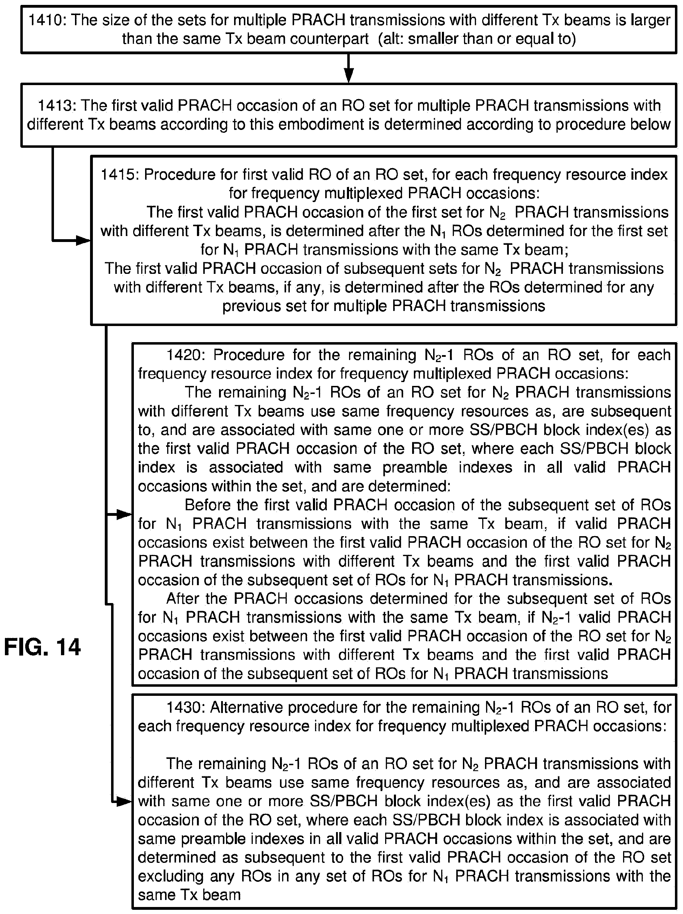

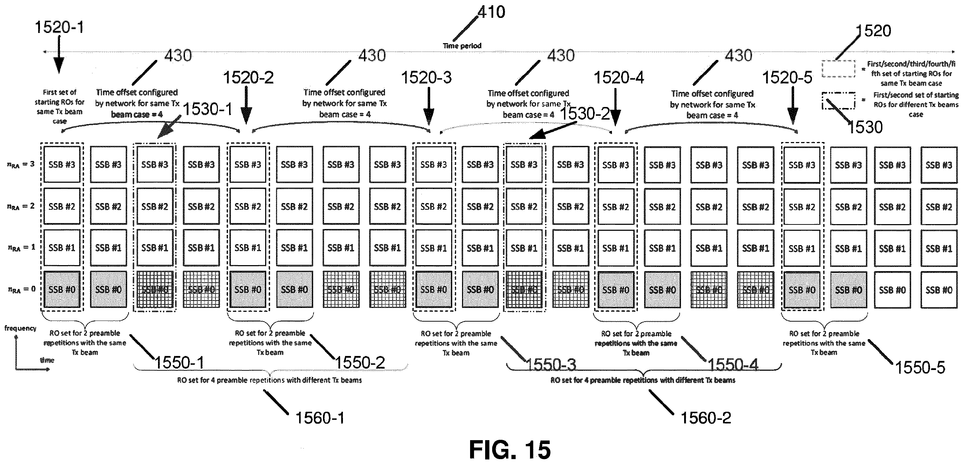

Method 3 is performed by the UE, and corresponds to Embodiment C and is illustrated in FIGS. 14 and 15 also (see block 720), all described below. This method may be represented as being incremental with respect to Embodiment A. In practice, however, Method 3 may be thought of as alternative to Method 1, wherein Method 3 still does not require additional signaling over Rel-18 signaling and is based on a new interpretation of the existing signaling. However, differently from Method 1, herein the ROs constituting an RO set can be non-consecutive. In other words, ROs for multiple PRACH transmissions with same TX beam would exist between ROs for multiple PRACH transmissions with different TX beams that are part of the same RO set for different TX beams.

Method 4 is described in FIG. 8 and is as follows. FIG. 8 includes a method for configuring a frequency offset between sets of ROs for (e.g., legacy) multiple PRACH transmissions and sets of ROs for multiple PRACH transmissions with different TX beams. See block 810. It is noted that legacy multiple PRACH transmissions means multiple PRACH transmissions with a same TX beam. There are multiple additional examples.

a. According to one embodiment the frequency offset allows to determine the sets of ROs consisting of ROs with a specific frequency domain index (and not simply for all possible indices), but not overlapped in time with legacy sets of ROs. See block 815.

b. According to another embodiment, the frequency offset can also be used in conjunction with the method as per "3" (FIG. 7), by means of which sets of ROs consisting of non-consecutive ROs can be determined, where ROs of the set have a specific frequency domain index. See block 820.

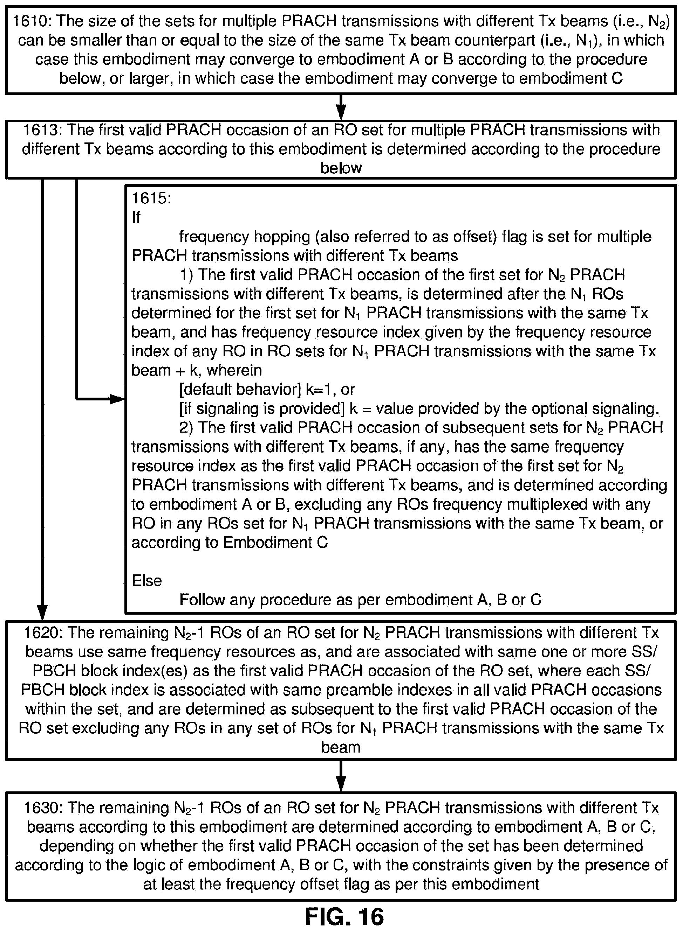

Method 4 corresponds to Embodiment D, described below, and also described in part by FIGS. 16, 17, 18, and 19. See block 830. This method is again incremental with respect to Embodiment A. In other words, Method 4 is Method 1 (same new interpretation of the existing signaling) plus a new indication to apply a frequency offset to RO set determination for PRACH repetitions with different beams as well.

It should be noted that, in the above list, the RO set determination implies corresponding starting RO determination.

Now that an overview has been provided, additional details are provided. These are presented though Embodiments A-D below. It is observed that in the following the terminology "Rel-18 time offset" refers to a time offset configured for determining sets of physical random-access channel occasions for performing multiple transmissions of at least one preamble for a random-access channel with same transmission beam. The first expression is mainly used herein, for simplicity, but the two expressions are to be considered as identical in meaning are used interchangeably.

A condition that is valid for all the embodiments described below is the following: A first PRACH occasion of an RO set for $N_2$ PRACH transmissions with different Tx beams is valid only $N_2$ - 1 other valid PRACH occasions of a set for $N_2$ PRACH transmissions with different Tx beams can be determined within the time period, according to the conditions for such ROs to be part or a set. As further explanation, consider the following. Assuming that $N_2$ PRACH transmissions with different Tx beams are to be performed, then a first RO of a set is valid only if other $N_2$ - 1 other valid PRACH occasions can be found within the same time period, whereby such $N_2$ - 1 ROs satisfy the conditions for being part of a set. Conditions for an RO being part of an RO set include the following: same frequency index as the starting RO, consecutive in time to the starting RO, associated to same SSB index and preamble set as the starting RO.

It is observed that Embodiment C can be implemented in conjunction with any of the other embodiments.

Embodiment A is described now. This embodiment is described in conjunction with the flow diagram in FIG. 9.

In this embodiment, the size of the sets for multiple PRACH transmissions with different Tx beams (i.e., $N_2$) is smaller than or equal to the size of the same Tx beam counterpart (i.e., $N_1$). See block 910 of FIG. 9. It is noted that in this block and the other blocks that use the term "counterpart", the "a size of a same transmission beam counterpart" is meant to be a compact version of "a size of the sets for multiple random-access channel preamble transmissions with same transmission beam".

It is noted that the constraints on the size in this block capture an example of a natural version of the embodiments, but this does not imply that one could not have, for instance, larger than $N_1$, since in this case the method would all depend on the time offset value. Thus, while $N_2$ is smaller than or equal to the size of $N_1$ in the example of FIG. 9, $N_2$ may also be greater than $N_1$ if desired, in an alternate ("alt") embodiment.

According to this first embodiment, the UE determines RO set(s) for multiple PRACH transmissions with different Tx beams by reinterpreting existing Rel-18 signaling. More precisely, consider FIGS. 10 and 11, where an example of time period for multiple PRACH transmissions is given and where:

$N_1 = N_2 = 4$; and
TimeOffsetBetweenStartingRO = 8 (12 in FIG. 11).

FIG. 10 illustrates RO set determination for multiple PRACH transmissions with different Tx beams, when Rel-18 time offset = 8 is configured (that is, time offset for the case of multiple PRACH transmissions with a same Tx beam case of 8). In FIG. 10, the time offset 430 that is set by the network is 8, and there are two RO sets 450-1 and 450-2 for 4 PRACH repetitions with the same Tx beam, and the first set 420-1 and second set 420-2 of starting ROs are shown. There is also one RO set 1050 for 4 PRACH repetitions with different Tx beams.

FIG. 11 illustrates RO set determination for multiple PRACH transmissions with different Tx beams, when Rel-18 time offset = 12 is configured. This example has a time offset 430 configured by the network for the same Tx beam case of 12. Also shown are a first set 1120-1 of starting ROs for different Tx beams case, a second set 1120-2 of starting ROs for different Tx beams case, and a third set 1120-3 of starting ROs for different Tx beams case, and also the RO set 1050-1 for 4 PRACH repetitions with different Tx beams, the RO set 1050-2 for 4 PRACH repetitions with different Tx beams, and the RO set 1050-3 for 4 PRACH repetitions with different Tx beams. The RO set 450-1 for 4 PRACH repetitions with the same Tx beam is shown, as is the RO set 450-2 for 4 PRACH repetitions with the same Tx beam. The first set 420-1 and second set 420-2 of starting ROs are shown.

Returning to FIG. 9, The first valid PRACH occasion of an RO set for multiple PRACH transmissions with different Tx beams according to this example is determined according to one of the procedures below, whereas the remaining $N_2$ - 1 ROs of an RO set for $N_2$ PRACH transmissions with different Tx beams are consecutive in time with respect to, use same frequency resources as, and are associated with same one or more synchronization signal block (SSB) index(es) as the first valid PRACH occasion of the RO set, and each synchronization signal block index is associated with same preamble indexes in all valid PRACH occasions within the set. See block 913 of FIG. 9.

Additional possible procedures are now described in reference to FIG. 9.

Procedure 1 is described in block 915. In this procedure, for each (e.g., individual) frequency resource index for frequency multiplexed PRACH occasions:

1) The first valid PRACH occasion of the first set for $N_2$ PRACH transmissions with different Tx beams, is determined after the $N_1$ ROs determined for the first set for $N_1$ PRACH transmissions with the same Tx beam.

2) The first valid PRACH occasion of subsequent sets for $N_2$ PRACH transmissions with different Tx beams, if any, is determined after the ROs determined for any previous set for multiple PRACH transmissions.

Procedure 2 is described in block 920. In this procedure, for each (e.g., individual) frequency resource index for frequency multiplexed PRACH occasions:

The first valid PRACH occasion (starting RO) of any set for $N_2$ PRACH transmissions with different Tx beams, if any, is determined after the $i \cdot N_2$ ROs determined for the previous sets for $N_2$ PRACH transmissions with different Tx beams, if any, after the previous set for $N_1$ PRACH transmissions with the same Tx beam, where $0 \leq$

$$i \leq \frac{\text{TimeOffsetBetweenStartingRO} - N_1}{N_2} - 1$$

. The TimeOffsetBetweenStartingRO is the time offset between the starting ROs of any two consecutive RO sets, expressed as a number of valid ROs associated with same SS/PBCH block index(es) as the starting RO of the first of the two RO sets, where each SS/PBCH block index is associated with same preambles. For instance, in FIGS. 10 and 11, this is time offset 430 that is configured to 8 in FIG. 10 and 12 in FIG. 11. In more general terms, the time offset is between any two consecutive first valid physical random-access channel occasions of any two consecutive sets of physical random-access channel occasions per time period. Furthermore, the term T may be used to represent TimeOffsetBetweenStartingRO, since this makes description of these concepts easier.

Embodiment B is now described using FIG. 12. The size of the sets for multiple PRACH transmissions with different Tx beams (i.e., $N_2$) is smaller than or equal to the size of the same Tx beam counterpart (i.e., $N_1$). See block 1210.

Similar to the description above about FIG. 9, while $N_2$ is smaller than or equal to the size of $N_1$ in the example of FIG. 12, $N_2$ may also be greater than $N_1$ if desired, in an alternate ("alt") embodiment.

According to another embodiment, additional signaling can be used by the UE, together with the reinterpretation of the existing Rel-18 signaling, to determine RO set(s) for multiple PRACH transmissions with different Tx beams reinterpreting existing Rel-18 signaling. In this case, an indication different from an explicit value, e.g., a flag (e.g., a single bit with one value indicating reuse and one value indicating no reuse, which could be a default), is provided by gNB in a cell-specific manner via higher-layer signaling, to configure the UE for reusing the time offset configuration for Rel-18 as time offset configuration for multiple PRACH transmission with different Tx beams. More precisely, consider FIG. 13, where an example of time period for multiple PRACH transmissions is given and where:

$N_1 = N_2 = 4$; and
TimeOffsetBetweenStartingRO = 12.

FIG. 13 illustrates RO set determination for multiple PRACH transmissions with different Tx beams using Rel-18 time offset, when Rel-18 time offset = 12 is configured. This example has a time offset 430-1 configured by the network for the same Tx beam case of 12, whereby an additional flag is provided (see block 1390) to the UE for the latter to interpret the time offset as an identical second time offset 430-2 implicitly configured by the network for the different Tx beams case of 12. In this case, within a time period, the first valid PRACH occasion of the first RO set for multiple PRACH transmissions with different Tx beams is after the ROs determined for the first RO set for multiple PRACH transmissions with same Tx beam, whereas the first valid PRACH occasion of any subsequent RO set for multiple PRACH transmissions with different Tx beams is after second time offset 430-2 expressed as a number of valid ROs associated with same SS/PBCH block index(es) as the starting RO of the previous RO set for multiple PRACH transmissions with different Tx beams, where each SS/PBCH block index is associated with same preambles. Also shown are a first set 1120-1 of starting ROs for different Tx beams case, and a second set 1120-2 of starting ROs for different Tx beams case, and also the RO set 1050-1 for 4 PRACH repetitions with different Tx beams, and the RO set 1050-2 for 4 PRACH repetitions with different Tx beams. The RO set 450-1 for 4 PRACH repetitions with the same Tx beams is shown, as is the RO set 450-2 for 4 PRACH repetitions with the same Tx beams. The first set 420-1 and second set 420-2 of starting ROs are also shown.

Returning to FIG. 12, the first valid PRACH occasion of an RO set for multiple PRACH transmissions with different Tx beams according to this embodiment is determined according to the procedure below, whereas the remaining $N_2 - 1$ ROs of an RO set for $N_2$ PRACH transmissions with different Tx beams are consecutive in time with respect to, use same frequency resources as, and are associated with same one or more SS/PBCH block index(es) as the first valid PRACH occasion of the set, and each SS/PBCH block index is associated with same preamble indexes in all valid PRACH occasions within the set. See block 1213.

See block 1215. For each (e.g., individual) frequency resource index for frequency multiplexed PRACH occasions:

If the indication to reuse Rel-18 time offset configuration for the multiple PRACH transmissions with different Tx beams is not provided, follow any procedure as per embodiment A

Else,

1) The first valid PRACH occasion of the first set for $N_2$ PRACH transmissions with different Tx beams, is determined after the ROs determined for the first set for $N_1$ PRACH transmissions with the same Tx beam.

2) The first valid PRACH occasion of subsequent sets for $N_2$ PRACH transmissions with different Tx beams, if any, is after TimeOffsetBetweenStartingRO valid ROs associated with same SS/PBCH block index(es) as the starting RO of the previous RO set for multiple PRACH transmissions with different Tx beams, where each SS/PBCH block index is associated with same preambles.

It is worth noticing that, in some other implementations, the Rel-18 time offset (if configured) may be directly re-used for determination of sets of ROs for multiple PRACH transmissions with different Tx beams. In other words, considering the above procedure, only the part after the "Else" would be specified if the Rel-18 time offset is configured.

Embodiment C is described in reference to FIG. 14. In block 1410, the size of the sets for multiple PRACH transmissions with different Tx beams may be larger than the same Tx beam counterpart.

It is noted that the constraints on the size in this block capture an example of a natural version of the embodiments, but this does not imply that one could not have, for instance, smaller than or equal to $N_1$, since in this case the method would all depend on the time offset value. Thus, while $N_2$ is larger than the size of $N_1$ in the example of FIG. 9, $N_2$ may also be smaller than or equal to $N_1$ if desired, in an alternate ("alt") embodiment.

According to another embodiment, the UE determines RO set(s) for multiple PRACH transmissions with different Tx beams reinterpreting existing Rel-18 signaling, but such RO sets can comprise ROs that are non-consecutive in time according to given conditions. More precisely, consider FIG. 15, where an example of time period for multiple PRACH transmissions is given and where:

$N_1 = 2$, $N_2 = 4$; and
TimeOffsetBetweenStartingRO = 4.

FIG. 15 illustrates RO set determination for multiple PRACH transmissions with different Tx beams using non-consecutive ROs. This example has a time offset 430 configured by the network for the same Tx beam case of 4, and this is repeated for a total of 4 times in the time period. Also shown are five sets 1520-1, 1520-2, 1520-3, 1520-4, and 1520-5 of starting ROs for a same Tx beams case, and two sets 1530-1 and 1530-2 of starting ROs for different Tx beams case. There are RO sets 1550-1, 1550-2, 1550-3, 1550-4, and 1550-5 for 2 PRACH repetitions with the same TX beams. There are also RO sets 1560-1 and 1560-2 for 4 PRACH repetitions with different TX beams.

Returning to FIG. 14, the first valid PRACH occasion of an RO set for multiple PRACH transmissions with different Tx beams according to this embodiment is determined according to procedure below. See block 1413.

See block 1415, where a procedure for first valid RO of an RO set is described. For each (e.g., individual) frequency resource index for frequency multiplexed PRACH occasions:

The first valid PRACH occasion of the first set for $N_2$ PRACH transmissions with different Tx beams, is determined after the $N_1$ ROs determined for the first set for $N_1$ PRACH transmissions with the same Tx beam.

The first valid PRACH occasion of subsequent sets for $N_2$ PRACH transmissions with different Tx beams, if any, is determined after the ROs determined for any previous set for multiple PRACH transmissions.

See block 1420 for the following procedure for the remaining $N_2$ - 1 ROs of an RO set. For each (e.g., individual) frequency resource index for frequency multiplexed PRACH occasions:

The remaining $N_2$ - 1 ROs of an RO set for $N_2$ PRACH transmissions with different Tx beams use same frequency resources as, are subsequent to, and are associated with same one or more SS/PBCH block index(es) as the first valid PRACH occasion of the RO set, where each SS/PBCH block index is associated with same preamble indexes in all valid PRACH occasions within the set, and are determined:

Before the first valid PRACH occasion of the subsequent set of ROs for $N_1$ PRACH transmissions with the same Tx beam, if valid PRACH occasions exist between the first valid PRACH occasion of the RO set for $N_2$ PRACH transmissions with different Tx beams and the first valid PRACH occasion of the subsequent set of ROs for $N_1$ PRACH transmissions.

After the PRACH occasions determined for the subsequent set of ROs for $N_1$ PRACH transmissions with the same Tx beam, if less than $N_2$ - 1 valid PRACH occasions exist between the first valid PRACH occasion of the RO set for $N_2$ PRACH transmissions with different Tx beams and the first valid PRACH occasion of the subsequent set of ROs for $N_1$ PRACH transmissions.

See block 1430 for the alternative procedure for the remaining $N_2$ - 1 ROs of an RO set. For each (e.g., individual) frequency resource index for frequency multiplexed PRACH occasions:
The remaining $N_2$ - 1 ROs of an RO set for $N_2$ PRACH transmissions with different Tx beams use same frequency resources as, and are associated with same one or more SS/PBCH block index(es) as the first valid PRACH occasion of the RO set, where each SS/PBCH block index is associated with same preamble indexes in all valid PRACH occasions within the set, and are determined as subsequent to the first valid PRACH occasion of the RO set excluding any ROs in any set of ROs for $N_1$ PRACH transmissions with the same Tx beam.

Embodiment D is described in part through reference to FIG. 16.

The size of the sets for multiple PRACH transmissions with different Tx beams (i.e., $N_2$) can be smaller than or equal to the size of the same Tx beam counterpart (i.e., $N_1$), in which case this embodiment may converge to embodiment A or B according to the procedure below, or larger, in which case the embodiment may converge to embodiment C. See block 1610.

It is noted that the constraints on the size in this block capture an example of a natural version of the embodiments, but this does not imply that one could not have the opposite scenario. For instance, the size of the sets for multiple PRACH transmissions with different Tx beams (i.e., $N_2$) can be smaller than or equal to the size of the same Tx beam counterpart (i.e., $N_1$), in which case this embodiment may converge to embodiment C, or larger, in which case the embodiment may converge to embodiment A or B according to the procedure below.

According to this other embodiment, additional signaling can be used by the UE, together with any other signaling option and corresponding behavior as per Embodiment A, B or C, to determine RO set(s) for multiple PRACH transmissions with different Tx beams, e.g., reinterpreting existing Rel-18 signaling. In this case, at least an indication, e.g., a flag, is provided by gNB in a cell-specific manner via, e.g., higher-layer signaling, to configure the UE for applying a frequency offset to determine the frequency resource index of RO sets for $N_2$ PRACH transmissions with different Tx beams as a function of the frequency resource index of RO sets for $N_1$ PRACH transmissions with the same Tx beam. An optional additional signaling may also be provided to indicate to the UE a difference in terms of frequency resource indexes of the ROs in RO sets for $N_1$ PRACH transmissions with same Tx beam and ROs in RO sets for $N_2$ PRACH transmissions with different Tx beams, e.g., frequency offset = 1. If such signaling is not provided, the UE applies a default behavior given by setting frequency offset = 1.

It is observed that this embodiment is particularly useful when the RO sets for $N_1$ PRACH transmissions with same Tx beam are determined using a subset of ROs mapped to the selected SS/PBCH index within an SSB-RO mapping cycle for a UE provided with a PRACH mask index. In this case, the frequency offset configuration would allow the UE to determine the RO sets for $N_2$ PRACH transmissions with different Tx beams using ROs other than the ones provided by the PRACH mask index.

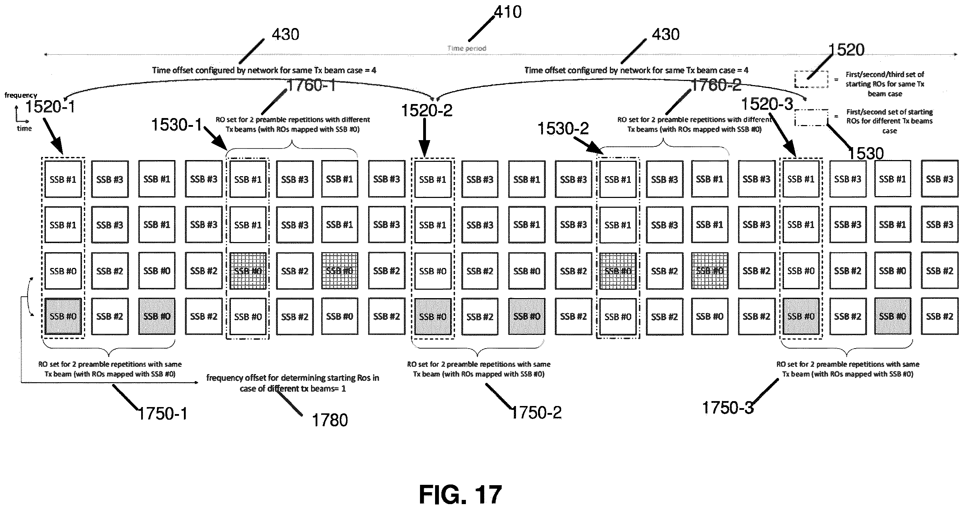

Consider FIG. 17, FIG. 18, and FIG. 19, where examples of time period for multiple PRACH transmissions are given and where:

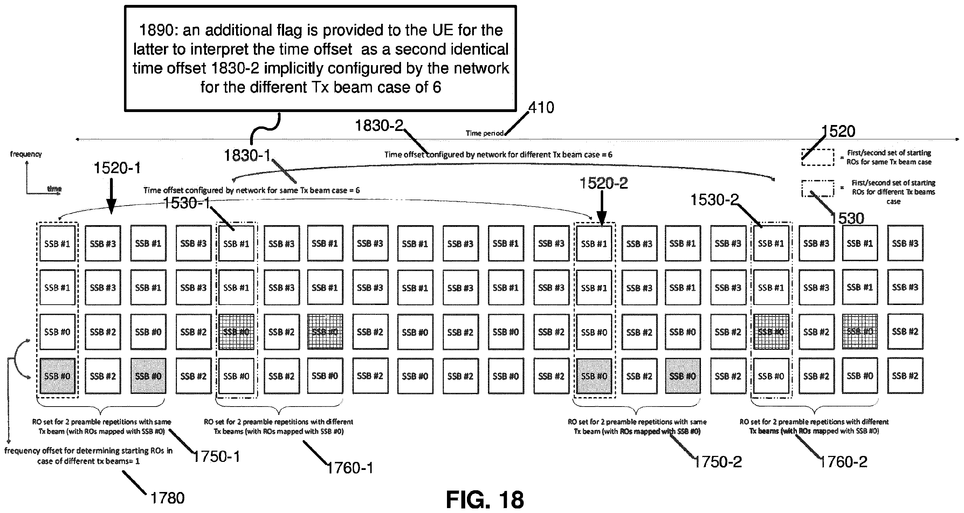

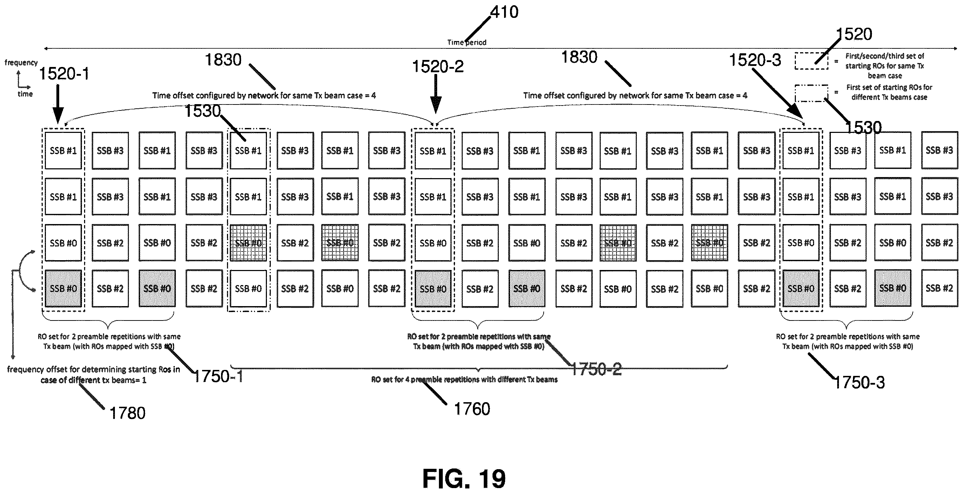

$N_1 = N_2 = 2$, in FIG. 17 and FIG. 18, and $N_1 = 2$, $N_2 = 4$ in FIG. 19;
TimeOffsetBetweenStartingRO = 4, in FIG. 17 and FIG. 19,
TimeOffsetBetweenStartingRO = 6 in FIG. 18; and
Frequency offset for determining RO sets for $N_2$ PRACH transmissions with different Tx beams = 1.

FIG. 17 illustrates RO set determination for multiple PRACH transmissions with different Tx beams using frequency offset. A time period 410 is shown, and a time offset 430 configured by the network for the same Tx beams case is set to 4, and this is repeated for a total of 2 times in the time period. This example shows three sets 1520-1, 1520-2, 1520-3 of starting ROs for a same Tx beams case, and two sets 1530-1 and 1530-2 of starting ROs for different Tx beams case. There are RO sets 1750-1, 1750-2, and 1750-3 for 2 PRACH repetitions with the same TX beams, with ROs mapped with SSB #0 (note that the two SSB #0 symbols are separated by one SSB #2 symbol in time). There are also RO sets 1760-1 and 1760-2 for 2 PRACH repetitions with different TX beams, with ROs mapped with SSB #0. There is also a frequency offset 1780 for determining starting ROs in case of different Tx beams, where the frequency offset is 1 in this example.

FIG. 18 illustrates RO set determination for multiple PRACH transmissions with different Tx beams using frequency offset and Rel-18 time offset, when Rel-18 time offset = 6 is configured. A time period 410 is shown, time offset 1830-1 is shown being configured by the network for the same Tx beams case and is set to 6, whereby an additional flag is provided (see block 1890) to the UE for the latter to interpret the time offset as an identical second time offset 1830-2 implicitly configured by the network for the different Tx beam case of 6. In this case, within a time period, the first valid PRACH occasion of the first RO set for multiple PRACH transmissions with different Tx beams is after the ROs determined for the first RO set for multiple PRACH transmissions with a same Tx beam, whereas the first valid PRACH occasion of any subsequent RO set for multiple PRACH transmissions with different Tx beams is after time offset 1830-2 and corresponding valid ROs associated with same SS/PBCH block index(es) as the starting RO of the previous RO set for multiple PRACH transmissions with different Tx beams, where each SS/PBCH block index is associated with same preambles. That is, time offset 1830-1 corresponds to RO sets 1750 and time offset 1830-2 corresponds to RO sets 1760. This example shows two sets 1520-1, 1520-2 of starting ROs for a same Tx beams case, and two sets 1530-1 and 1530-2 of starting ROs for different Tx beams case. There are RO sets 1750-1, 1750-2 for 2 PRACH repetitions with the same TX beams, with ROs mapped with SSB #0 (note that the two SSB #0 symbols are separated by one SSB #2 symbol in time). There are also RO sets 1760-1 and 1760-2 for 2 PRACH repetitions with different TX beams, with ROs mapped with SSB #0. There is also a frequency offset 1780 for determining starting ROs in case of different Tx beams, where the frequency offset is 1 in this example.

FIG. 19 illustrates RO set determination for multiple PRACH transmissions with different Tx beams using frequency offset and using non-consecutive ROs. A time period 410 is shown, and a time offset 1830 is configured by the network for the same Tx beam case, is set to 4, and repeats twice within the time period 410. This example shows three two sets 1520-1, 1520-2, 1520-3 of starting ROs for a same Tx beams case, and one set 1530 of starting ROs for different Tx beams case. There are RO sets 1750-1, 1750-2, 1750-3 for 2 PRACH repetitions with the same TX beams, with ROs mapped with SSB #0 (note that the two SSB #0 symbols are separated by one SSB #2 symbol in time). There is also an RO set 1760 for 4 PRACH repetitions with different TX beams. There is also a frequency offset 1780 for determining starting ROs in case of different Tx beams, where the frequency offset is 1 in this example.

Returning to FIG. 16, the first valid PRACH occasion of an RO set for multiple PRACH transmissions with different Tx beams according to this embodiment is determined according to the procedure below. See block 1613 of FIG. 16.

See block 1615 of FIG. 16. For each (e.g., individual) frequency resource index for frequency multiplexed PRACH occasions:

If

frequency hopping (also referred to as offset) flag is set for multiple PRACH transmissions with different Tx beams:

1) The first valid PRACH occasion of the first set for $N_2$ PRACH transmissions with different Tx beams, is determined after the $N_1$ ROs determined for the first set for $N_1$ PRACH transmissions with the same Tx beam, and has frequency resource index given by the frequency resource index of any RO in RO sets for $N_1$ PRACH transmissions with the same Tx beam + k, wherein

[default behavior] k=1, or
[if optional signaling is provided] k = value provided by the optional signaling.

2) The first valid PRACH occasion of subsequent sets for $N_2$ PRACH transmissions with different Tx beams, if any, has the same frequency resource index as the first valid PRACH occasion of the first set for $N_2$ PRACH transmissions with different Tx beams, and is determined according to embodiment A or B, excluding any ROs frequency multiplexed with any RO in any ROs set for $N_1$ PRACH transmissions with the same Tx beam, or according to Embodiment C.

Else
Follow any procedure as per embodiment A, B or C.

The remaining $N_2$ - 1 ROs of an RO set for $N_2$ PRACH transmissions with different Tx beams use same frequency resources as, and are associated with same one or more SS/PBCH block index(es) as the first valid PRACH occasion of the RO set, where each SS/PBCH block index is associated with same preamble indexes in all valid PRACH occasions within the set, and are determined as subsequent to the first valid PRACH occasion of the RO set excluding any ROs in any set of ROs for $N_1$ PRACH transmissions with the same Tx beam. This has also been previously described above. See block 1620.

In further detail, the remaining $N_2$ - 1 ROs of an RO set for $N_2$ PRACH transmissions with different Tx beams according to this embodiment are determined according to embodiment A, B or C, depending on whether the first valid PRACH occasion of the set has been determined according to the logic of embodiment A, B or C, with the constraints given by the presence of at least the frequency offset flag as per this embodiment. See block 1630.

Turning to FIG. 20, this figure shows a block diagram of one possible and non-limiting example of a cellular network 1 that is connected to a user equipment (UE) 10. A number of network elements are shown in the cellular network of FIG. 20: a base station 70; and a core network 90.

In FIG. 20, a user equipment (UE) 10 is in wireless communication via radio link 11 with the base station 70 of the cellular network 1. A UE 10 is a wireless communication device, such as a mobile device, that is configured to access a cellular network. The UE 10 is illustrated with one or more antennas 28. The ellipses 2 indicate there could be multiple UEs 10 in wireless communication via radio links with the base station 70. The UE 10 includes one or more processors 13, one or more memories 15, and other circuitry 16. The other circuitry 16 includes one or more receivers (Rx(s)) 17 and one or more transmitters (Tx(s)) 18. A program 12 is used to cause the UE 10 to perform the operations described herein. For a UE 10, the other circuitry 16 could include circuitry such as for user interface elements (not shown) like a display.

The base station 70, as a network element of the cellular network 1, provides the UE 10 access to cellular network 1 and to the data network 91 via the core network 90 (e.g., via a user plane function (UPF) of the core network 90). As such, the base station 70 may be considered to be an access node, which provides access by UE(s) 10 to the cellular network 1. The base station 70 is illustrated as having one or more antennas 58. In general, the base station 70 may be referred to as RAN node 70, although many will make reference to this as a gNB (gNode B, a base station for NR, new radio) instead. There are, however, many other examples of RAN nodes including an eNB (evolved Node B) or TRP (Transmission-Reception Point). The base station 70 includes one or more processors 73, one or more memories 75, and other circuitry 76. The other circuitry 76 includes one or more receivers (Rx(s)) 77 and one or more transmitters (Tx(s)) 78. A program 72 is used to cause the base station 70 to perform the operations described herein.

It is noted that the base station 70 may instead be implemented via other wireless technologies, such as Wi-Fi (a wireless networking protocol that devices use to communicate without direct cable connections). In the case of Wi-Fi, the radio link 11 could be characterized as a wireless link.

Two or more base stations 70 communicate using, e.g., link(s) 79. The link(s) 79 may be wired or wireless or both and may implement, e.g., an Xn interface for 5G (fifth generation), an X2 interface for LTE (Long Term Evolution), or other suitable interface for other standards.

The cellular network 1 may include a core network 90, as a second network element or elements, that may include core network functionality, and which provide connectivity via a link or links 81 with a data network 91, such as a telephone network and/or a data communications network (e.g., the Internet). The core network 90 includes one or more processors 93, one or more memories 95, and other circuitry 96. The other circuitry 96 includes one or more receivers (Rx(s)) 97 and one or more transmitters (Tx(s)) 98. A program 92 is used to cause the core network 90 to perform the operations described herein.

The core network 90 could be a 5GC (5G core network). The core network 90 can implement or comprise multiple network functions (NF(s)) 99, and the program 92 may comprise one or more of the NFs 99. A 5G core network may use hardware such as memory and processors and a virtualization layer. It could be a single standalone computing system, a distributed computing system, or a cloud computing system. The NFs 99, as network elements, of the core network could be containers or virtual machines running on the hardware of the computing system(s) making up the core network 90.

Core network functionality for 5G may include access and mobility management functionality that is provided by a network function 99 such as an access and mobility management function (AMF(s)), session management functionality that is provided by a network function such as a session management function (SMF). Core network functionality for access and mobility management in an LTE (Long Term Evolution) network may be provided by an MME (Mobility Management Entity) and/or SGW (Serving Gateway) functionality, which routes data to the data network. Many others are possible, as illustrated by the examples in FIG. 20: AMF; SMF; MME; SGW; GMLC (Gateway Mobile Location Center); LMF (Location Management Function); UDM (Unified Data Management)/UDR (Unified Data Repository); NRF (Network Repository Function); and/or E-SMLC (Evolved Serving Mobile Location Center). These are merely exemplary core network functionality that may be provided by the core network 90, and note that both 5G and LTE core network functionality might be provided by the core network 90. The base station 70 is coupled via a backhaul link 31 to the core network 90. The base station 70 and the core network 90 may include an NG (Next Generation) interface for 5G, or an S1 interface for LTE, or other suitable interface for other radio access technologies for communicating via the backhaul link 31.

In the data network 91, there is a computer-readable medium 94. The computer-readable medium 94 contains instructions that, when downloaded and installed into the memories 15, 75, or 95 of the corresponding UE 10, base station 70, and/or core network element(s) 90, and executed by processor(s) 13, 73, or 93, cause the respective device to perform corresponding actions described herein. The computer-readable medium 94 may be implemented in other forms, such as via a compact disc or memory stick.

The programs 12, 72, and 92 contain instructions stored by corresponding one or more memories 15, 75, or 95. These instructions, when executed by the corresponding one or more processors 13, 73, or 93, cause the corresponding apparatus 10, 70, or 90, to perform the operations described herein. The computer readable memories 15, 75, or 95 are circuitry and may be of any type suitable to the local technical environment and may be implemented using any suitable data storage technology, such as semiconductor-based memory devices, flash memory, firmware, magnetic memory devices and systems, optical memory devices and systems, fixed memory and removable memory. The computer readable memories 15, 75, and 95 may be means for performing storage functions. The processors 13, 73, and 93, are circuitry and may be of any type suitable to the local technical environment. For example, these processors may include one or more of general-purpose computers, special purpose computers, microprocessors, digital signal processors (DSPs), processors based on a multi-core processor architecture, and may also include specialized circuits such as field-programmable gate arrays (FPGAs), application specific circuits (ASICs), signal processing devices and other devices, or combinations of these devices, as non-limiting examples. The processors 13, 73, and 93 may be means for causing their respective apparatus to perform functions, such as those described herein.

The receivers 17, 77, and 97, and the transmitters 18, 78, and 98 may implement wired or wireless interfaces. The receivers and transmitters may be grouped together as transceivers.

The cellular network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities (such as network functions 99) that result from the network virtualization are still implemented, at some level, using hardware such as processors 73 and/or 93 and memories 75 and/or 95, and also such virtualized entities create technical effects.

It is noted that description herein relates to "cells", which may be described as performing functions, but it should be clear that the base station that forms the cell will perform the functions. The cell makes up part of a base station. That is, there can be multiple cells per base station. For instance, there could be three cells for a single carrier frequency and associated bandwidth, each cell covering one-third of a 360-degree area so that the single base station's coverage area covers an approximate oval or circle. Furthermore, each cell can correspond to a single carrier and a base station may use multiple carriers. So, if there are three 120-degree cells per carrier and two carriers, then the base station has a total of six cells.

In general, the various embodiments of the user equipment 10 can include, but are not limited to, cellular telephones (such as smart phones, mobile phones, cellular phones, voice over Internet Protocol (IP) (VoIP) phones, and/or wireless local loop phones), tablets, portable computers, vehicles or vehicle-mounted devices for, e.g., wireless V2X (vehicle-to-everything) communication, image capture devices such as digital cameras, gaming devices, music storage and playback appliances, Internet appliances (including Internet of Things, IoT, devices), IoT devices with sensors and/or actuators for, e.g., automation applications, as well as portable units or terminals that incorporate combinations of such functions, laptop-embedded equipment (LEE), laptop-mounted equipment (LME), Universal Serial Bus (USB) dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. That is, the UE 10 could be any end device that may be capable of wireless communication. By way of example rather than limitation, the UE may also be referred to as a communication device, terminal device (MT), a Subscriber Station (SS), a Portable Subscriber Station, a Mobile Station (MS), or an Access Terminal (AT).

The following are additional examples.

Example 1. A method, comprising: based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

Example 2. A method, comprising: based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

Example 3. The method according to either example 1 or 2, wherein the one or more sets of physical random-access channel occasions for performing multiple transmissions of at least one preamble for a random-access channel with different transmission beams are all associated with same one or more synchronization signal block indexes and wherein that at least one preamble to be transmitted is selected from a configured preamble set associated with a selected one of the one or more synchronization signal block indexes.

Example 4. The method according to any one of examples 1 to 3, wherein: a size of the sets for multiple random-access channel preamble transmissions with different transmission beams, $N_2$, is smaller than or equal to a size of the sets for multiple random-access channel preamble transmissions with same transmission beam, $N_1$; and the determining one or more sets of physical random-access channel occasions per time period further comprises, for individual frequency resource indexes for frequency multiplexed physical random-access channel occasions: a first valid physical random-access channel occasion of a first set for $N_2$ random-access channel preamble transmissions with different transmission beams, is determined after the $N_1$ physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams, is determined after the physical random-access channel occasions determined for any previous set for multiple random-access channel preamble transmissions.

Example 5. The method according to any one of examples 1 to 3, wherein: a size of the sets for multiple random-access channel preamble transmissions with different transmission beams, $N_2$, is smaller than or equal to a size of the sets for multiple random-access channel preamble transmissions with same transmission beam $N_1$; and the determining one or more sets of physical random-access channel occasions per time period further comprises, for individual frequency resource indexes for frequency multiplexed physical random-access channel occasions: a first valid physical random-access channel occasion of any given set for $N_2$ random-access channel preamble transmissions with different transmission beams is determined after $i \cdot N_2$ physical random-access channel occasions determined for previous sets for $N_2$ random-access channel preamble transmissions with different transmission beams after the previous set for $N_1$

$$0 \leq i \leq \frac{T - N_1}{N_2} - 1$$

random-access channel preamble transmissions with the same transmission beam, where , where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of the first of two physical random-access channel occasion sets, where each individual one of the one or more SS/PBCH block indexes is associated with same preambles in all the T valid physical random-access channel occasions.

Example 6. The method according to any of examples 4 or 5, wherein: a size of the sets for multiple random-access channel preamble transmissions with different transmission beams, $N_2$, is smaller than or equal to a size of the sets for multiple random-access channel preamble transmissions with same transmission beam, $N_1$; the determining one or more sets of physical random-access channel occasions per time period further comprises, for individual frequency resource indexes for frequency multiplexed physical random-access channel occasions: based on an indication to reuse a time offset configuration for multiple random-access channel preamble transmissions with a same transmission beam for the multiple random-access channel preamble transmissions with different transmission beams is not provided, following a procedure as per one of examples 4 or 5, else a first valid physical random-access channel occasion of the first set for $N_2$ random-access channel preamble transmissions with different transmission beams is determined after the physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams is after T consecutive valid physical random-access channel occasions in time from the first valid physical random-access channel occasion corresponding to the previous set for $N_2$ random-access channel preamble transmissions with different transmission beams, where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of a first of two physical random-access channel occasion sets, where an individual ones of the SS/PBCH block indexes is associated with same preambles.

Example 7. The method according to any one of examples 1 to 3, wherein: a size of the sets for multiple random-access channel preamble transmissions with different transmission beams, $N_2$, is larger than a size of the sets for multiple random-access channel preamble transmissions with same transmission beam, $N_1$; the determining one or more sets of physical random-access channel occasions per time period further comprises, for individual frequency resource indexes for frequency multiplexed physical random-access channel occasions and for a first valid physical random-access channel occasion of a physical random-access channel occasion set: a first valid physical random-access channel occasion of a first set for $N_2$ random-access channel preamble transmissions with different transmission beams is determined after $N_1$ physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams is determined after physical random-access channel occasions determined for any previous set for multiple random-access channel preamble transmissions.

Example 8. The method according to example 7, wherein: a size of the sets for multiple random-access channel preamble transmissions with different transmission beams, $N_2$, is larger than a size of a size of the sets for multiple random-access channel preamble transmissions with same transmission beam, $N_1$; and the determining one or more sets of physical random-access channel occasions per time period further comprises, for individual ones of frequency resource indexes for frequency multiplexed physical random-access channel occasions and for a remaining $N_2$-1 physical random-access channel occasions of a physical random-access channel occasion set: the remaining $N_2$-1 physical random-access channel occasions of a physical random-access channel occasion set for $N_2$ random-access channel preamble transmissions with different transmission beams use same frequency resources as, are subsequent to, and are associated with same one or more synchronization signal / physical broadcast channel (SS/PBCH) block indexes as the first valid physical random-access channel occasion of the physical random-access channel occasion set, where individual ones of the SS/PBCH block indexes are associated with same preamble indexes in all valid physical random-access channel occasions within the physical random-access channel occasion set, and are determined: before a first valid physical random-access channel occasion of a subsequent set of physical random-access channel occasions for $N_1$ random-access channel preamble transmissions with the same transmission beam, based on valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions; and after the physical random-access channel occasions determined for the subsequent set of physical random-access channel occasions for $N_1$ random-access channel preamble transmissions with the same transmission beam, based on less than $N_2$-1 valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions.

Example 9. The method according to example 7, wherein: a size of the sets for multiple random-access channel preamble transmissions with different transmission beams, $N_2$, is larger than a size of the sets for multiple random-access channel preamble transmissions with same transmission beam, $N_1$; and the determining one or more sets of physical random-access channel occasions per time period further comprises, for individual ones of frequency resource indexes for frequency multiplexed physical random-access channel occasions and for a remaining N2-1 physical random-access channel occasions of a physical random-access channel occasion set: the remaining $N_2$-1 physical random-access channel occasions of a physical random-access channel occasion set for $N_2$ random-access channel preamble transmissions with different transmission beams use same frequency resources as, and are associated with same one or more synchronization signal / physical broadcast channel (SS/PBCH) block indexes as the first valid physical random-access channel occasion of the physical random-access channel occasion set, where each individual one of the SS/PBCH block indexes is associated with same preamble indexes in all valid physical random-access channel occasions within the set, and are determined as being subsequent to the first valid physical random-access channel occasion of the physical random-access channel occasion set excluding any physical random-access channel occasions in any set of physical random-access channel occasions for $N_1$ random-access channel preamble transmissions with the same transmission beam.

Example 10. The method according to any one of examples 4 to 9, wherein: based on a frequency hopping flag being set for multiple random-access channel preamble transmissions with different transmission beams, performing the following: a first valid physical random-access channel occasion of a first set for $N_2$ random-access channel preamble transmissions with different transmission beams, is determined after $N_1$ physical random-access channel occasions determined for the first set for $N_1$ random-access channel preamble transmissions with the same transmission beam, and has frequency resource index given by the frequency resource index of any physical random-access channel occasion in physical random-access channel occasion sets for $N_1$ random-access channel preamble transmissions with the same transmission beam plus a value k, a first valid physical random-access channel occasion of any other sets in the time period for $N_2$ random-access channel preamble transmissions with different transmission beams has a same frequency resource index as the first valid physical random-access channel occasion of the first set for $N_2$ random-access channel preamble transmissions with different transmission beams, and is determined as follows: (i) based on a size of the sets for multiple random-access channel preamble transmissions with different transmission beams, $N_2$, is smaller than or equal to a size of the sets for multiple random-access channel preamble transmissions with same transmission beam, $N_1$, it is determined according to any one of examples 4, 5, or 6, excluding any physical random-access channel occasions frequency multiplexed with any physical random-access channel occasion in any physical random-access channel occasions set for N1 random-access channel preamble transmissions with the same transmission beam; and (i) based on the size of the sets for multiple random-access channel preamble transmissions with different transmission beams, $N_2$, is larger than the size of the sets for multiple random-access channel preamble transmissions with same transmission beam, $N_1$, it is determined according to any one of examples 7, 8, or 9; and else follow any procedure as per one of examples 4 to 9.

Example 11. The method according to example 10, wherein: k=1; or k is a value provided by signaling.

Example 12. A computer program, comprising instructions for performing the methods of any of examples 1 to 11, when the computer program is run on an apparatus.

Example 13. The computer program according to example 12, wherein the computer program is a computer program product comprising a computer-readable medium bearing instructions embodied therein for use with the apparatus.

Example 14. The computer program according to example 12, wherein the computer program is directly loadable into an internal memory of the apparatus.

Example 15. An apparatus, comprising means for performing: based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

Example 16. An apparatus, comprising means for performing: based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

Example 17. The apparatus according to either example 15 or 16, wherein the one or more sets of physical random-access channel occasions for performing multiple transmissions of at least one preamble for a random-access channel with different transmission beams are all associated with same one or more synchronization signal block indexes and wherein that at least one preamble to be transmitted is selected from a configured preamble set associated with a selected one of the one or more synchronization signal block indexes.

Example 18. The apparatus according to any one of examples 15 to 17, wherein: a size of the sets for multiple random-access channel preamble transmissions with different transmission beams, $N_2$, is smaller than or equal to a size of the sets for multiple random-access channel preamble transmissions with same transmission beam, $N_1$; and the determining one or more sets of physical random-access channel occasions per time period further comprises, for individual frequency resource indexes for frequency multiplexed physical random-access channel occasions: a first valid physical random-access channel occasion of a first set for $N_2$ random-access channel preamble transmissions with different transmission beams, is determined after the $N_1$ physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams, is determined after the physical random-access channel occasions determined for any previous set for multiple random-access channel preamble transmissions.

Example 19. The apparatus according to any one of examples 15 to 17, wherein: a size of the sets for multiple random-access channel preamble transmissions with different transmission beams, $N_2$, is smaller than or equal to a size of the sets for multiple random-access channel preamble transmissions with same transmission beam $N_1$; and the determining one or more sets of physical random-access channel occasions per time period further comprises, for individual frequency resource indexes for frequency multiplexed physical random-access channel occasions: a first valid physical random-access channel occasion of any given set for $N_2$ random-access channel preamble transmissions with different transmission beams is determined after $i \cdot N_2$ physical random-access channel occasions determined for previous sets for $N_2$ random-access channel preamble transmissions with different transmission beams after the previous set for $N_1$ random-access channel preamble transmissions with the same transmission beam, where $0 \leq i \leq \dfrac{T - N_1}{N_2} - 1$, where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of the first of two physical random-access channel occasion sets, where each individual one of the one or more SS/PBCH block indexes is associated with same preambles in all the T valid physical random-access channel occasions.

Example 20. The apparatus according to any of examples 18 or 19, wherein: a size of the sets for multiple random-access channel preamble transmissions with different transmission beams, $N_2$, is smaller than or equal to a size of the sets for multiple random-access channel preamble transmissions with same transmission beam, $N_1$; the determining one or more sets of physical random-access channel occasions per time period further comprises, for individual frequency resource indexes for frequency multiplexed physical random-access channel occasions: based on an indication to reuse a time offset configuration for multiple random-access channel preamble transmissions with a same transmission beam for the multiple random-access channel preamble transmissions with different transmission beams is not provided, following a procedure as per one of examples 18 or 19, else a first valid physical random-access channel occasion of the first set for $N_2$ random-access channel preamble transmissions with different transmission beams is determined after the physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams is after T consecutive valid physical random-access channel occasions in time from the first valid physical random-access channel occasion corresponding to the previous set for $N_2$ random-access channel preamble transmissions with different transmission beams, where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of a first of two physical random-access channel occasion sets, where an individual ones of the SS/PBCH block indexes is associated with same preambles.

Example 21. The apparatus according to any one of examples 15 to 17, wherein: a size of the sets for multiple random-access channel preamble transmissions with different transmission beams, $N_2$, is larger than a size of the sets for multiple random-access channel preamble transmissions with same transmission beam, $N_1$; the determining one or more sets of physical random-access channel occasions per time period further comprises, for individual frequency resource indexes for frequency multiplexed physical random-access channel occasions and for a first valid physical random-access channel occasion of a physical random-access channel occasion set: a first valid physical random-access channel occasion of a first set for $N_2$ random-access channel preamble transmissions with different transmission beams is determined after $N_1$ physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams is determined after physical random-access channel occasions determined for any previous set for multiple random-access channel preamble transmissions.

Example 22. The apparatus according to example 21, wherein: a size of the sets for multiple random-access channel preamble transmissions with different transmission beams, $N_2$, is larger than a size of a size of the sets for multiple random-access channel preamble transmissions with same transmission beam, $N_1$; and the determining one or more sets of physical random-access channel occasions per time period further comprises, for individual ones of frequency resource indexes for frequency multiplexed physical random-access channel occasions and for a remaining N2-1 physical random-access channel occasions of a physical random-access channel occasion set: the remaining $N_2$-1 physical random-access channel occasions of a physical random-access channel occasion set for $N_2$ random-access channel preamble transmissions with different transmission beams use same frequency resources as, are subsequent to, and are associated with same one or more synchronization signal / physical broadcast channel (SS/PBCH) block indexes as the first valid physical random-access channel occasion of the physical random-access channel occasion set, where individual ones of the SS/PBCH block indexes are associated with same preamble indexes in all valid physical random-access channel occasions within the physical random-access channel occasion set, and are determined: before a first valid physical random-access channel occasion of a subsequent set of physical random-access channel occasions for $N_1$ random-access channel preamble transmissions with the same transmission beam, based on valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions; and after the physical random-access channel occasions determined for the subsequent set of physical random-access channel occasions for $N_1$ random-access channel preamble transmissions with the same transmission beam, based on less than $N_2$-1 valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions.

Example 23. The apparatus according to example 21, wherein: a size of the sets for multiple random-access channel preamble transmissions with different transmission beams, $N_2$, is larger than a size of the sets for multiple random-access channel preamble transmissions with same transmission beam, $N_1$; and the determining one or more sets of physical random-access channel occasions per time period further comprises, for individual ones of frequency resource indexes for frequency multiplexed physical random-access channel occasions and for a remaining N2-1 physical random-access channel occasions of a physical random-access channel occasion set: the remaining $N_2$-1 physical random-access channel occasions of a physical random-access channel occasion set for $N_2$ random-access channel preamble transmissions with different transmission beams use same frequency resources as, and are associated with same one or more synchronization signal / physical broadcast channel (SS/PBCH) block indexes as the first valid physical random-access channel occasion of the physical random-access channel occasion set, where each individual one of the SS/PBCH block indexes is associated with same preamble indexes in all valid physical random-access channel occasions within the set, and are determined as being subsequent to the first valid physical random-access channel occasion of the physical random-access channel occasion set excluding any physical random-access channel occasions in any set of physical random-access channel occasions for $N_1$ random-access channel preamble transmissions with the same transmission beam.

Example 24. The apparatus according to any one of examples 18 to 23, wherein: based on a frequency hopping flag being set for multiple random-access channel preamble transmissions with different transmission beams, performing the following: a first valid physical random-access channel occasion of a first set for $N_2$ random-access channel preamble transmissions with different transmission beams, is determined after $N_1$ physical random-access channel occasions determined for the first set for $N_1$ random-access channel preamble transmissions with the same transmission beam, and has frequency resource index given by the frequency resource index of any physical random-access channel occasion in physical random-access channel occasion sets for $N_1$ random-access channel preamble transmissions with the same transmission beam plus a value k, a first valid physical random-access channel occasion of any other sets in the time period for $N_2$ random-access channel preamble transmissions with different transmission beams has a same frequency resource index as the first valid physical random-access channel occasion of the first set for $N_2$ random-access channel preamble transmissions with different transmission beams, and is determined as follows: (i) based on a size of the sets for multiple random-access channel preamble transmissions with different transmission beams, $N_2$, is smaller than or equal to a size of the sets for multiple random-access channel preamble transmissions with same transmission beam, $N_1$, it is determined according to any one of examples 4, 5, or 6, excluding any physical random-access channel occasions frequency multiplexed with any physical random-access channel occasion in any physical random-access channel occasions set for N1 random-access channel preamble transmissions with the same transmission beam; and (i) based on the size of the sets for multiple random-access channel preamble transmissions with different transmission beams, $N_2$, is larger than the size of the sets for multiple random-access channel preamble transmissions with same transmission beam, $N_1$, it is determined according to any one of examples 21, 22, or 23; and else follow any procedure as per one of examples 18 to 23.

Example 25. The apparatus according to example 24, wherein: k=1; or k is a value provided by signaling.

Example 26. The apparatus of any preceding apparatus example, wherein the means comprises: at least one processor; and at least one memory storing instructions that, when executed by at least one processor, cause the performance of the apparatus.

Example 27. A system, comprising: a first apparatus of any of examples 15 to 26, and a second apparatus connected through a radio interface to the first apparatus, the second apparatus comprising means for performing: sending configuration comprising time offset configuration to the first apparatus, the time offset configuration comprising indication of the time offset.

Example 28. An apparatus, comprising: one or more processors; and one or more memories storing instructions that, when executed by the one or more processors, cause the apparatus at least to perform: based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following: determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period; selecting, by the user equipment, a set from the one or more sets of physical random-access channel occasions per time period; and performing, in response to selection of the set, multiple transmissions of at least one preamble for a random-access channel with different transmission beams on the selected set.

Example 29. An apparatus, comprising: one or more processors; and one or more memories storing instructions that, when executed by the one or more processors, cause the apparatus at least to perform: based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following: (i) determining, by the user equipment in a cell, that the multiple transmissions of at least one preamble for a random-access channel with different transmission beams are disabled for the cell; or (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period; selecting, by the user equipment, a set from the one or more sets of physical random-access channel occasions per time period; and performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

Example 30. The apparatus according to either example 28 or 29, wherein the one or more sets of physical random-access channel occasions for performing multiple transmissions of at least one preamble for a random-access channel with different transmission beams are all associated with same one or more synchronization signal block indexes and wherein that at least one preamble to be transmitted is selected from a configured preamble set associated with a selected one of the one or more synchronization signal block indexes.

Example 31. The apparatus according to any one of examples 28 to 30, wherein: a size of the sets for multiple random-access channel preamble transmissions with different transmission beams, $N_2$, is smaller than or equal to a size of the sets for multiple random-access channel preamble transmissions with same transmission beam, $N_1$; and the determining one or more sets of physical random-access channel occasions per time period further comprises, for individual frequency resource indexes for frequency multiplexed physical random-access channel occasions: a first valid physical random-access channel occasion of a first set for $N_2$ random-access channel preamble transmissions with different transmission beams, is determined after the $N_1$ physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams, is determined after the physical random-access channel occasions determined for any previous set for multiple random-access channel preamble transmissions.

Example 32. The apparatus according to any one of examples 28 to 30, wherein: a size of the sets for multiple random-access channel preamble transmissions with different transmission beams, $N_2$, is smaller than or equal to a size of the sets for multiple random-access channel preamble transmissions with same transmission beam $N_1$; and the determining one or more sets of physical random-access channel occasions per time period further comprises, for individual frequency resource indexes for frequency multiplexed physical random-access channel occasions: a first valid physical random-access channel occasion of any given set for $N_2$ random-access channel preamble transmissions with different transmission beams is determined after $i \cdot N_2$ physical random-access channel occasions determined for previous sets for $N_2$ random-access channel preamble transmissions with different transmission beams after the previous set for $N_1$ random-access channel preamble transmissions with the same transmission beam, where $0 \leq i \leq \dfrac{T - N_1}{N_2} - 1$, where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of the first of two physical random-access channel occasion sets, where each individual one of the one or more SS/PBCH block indexes is associated with same preambles in all the T valid physical random-access channel occasions.

Example 33. The apparatus according to any of examples 31 or 32, wherein: a size of the sets for multiple random-access channel preamble transmissions with different transmission beams, $N_2$, is smaller than or equal to a size of the sets for multiple random-access channel preamble transmissions with same transmission beam, $N_1$; the determining one or more sets of physical random-access channel occasions per time period further comprises, for individual frequency resource indexes for frequency multiplexed physical random-access channel occasions: based on an indication to reuse a time offset configuration for multiple random-access channel preamble transmissions with a same transmission beam for the multiple random-access channel preamble transmissions with different transmission beams is not provided, following a procedure as per one of examples 31 or 32, else a first valid physical random-access channel occasion of the first set for $N_2$ random-access channel preamble transmissions with different transmission beams is determined after the physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams is after T consecutive valid physical random-access channel occasions in time from the first valid physical random-access channel occasion corresponding to the previous set for $N_2$ random-access channel preamble transmissions with different transmission beams, where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of a first of two physical random-access channel occasion sets, where an individual ones of the SS/PBCH block indexes is associated with same preambles.

Example 34. The apparatus according to any one of examples 28 to 30, wherein: a size of the sets for multiple random-access channel preamble transmissions with different transmission beams, $N_2$, is larger than a size of the sets for multiple random-access channel preamble transmissions with same transmission beam, $N_1$; the determining one or more sets of physical random-access channel occasions per time period further comprises, for individual frequency resource indexes for frequency multiplexed physical random-access channel occasions and for a first valid physical random-access channel occasion of a physical random-access channel occasion set: a first valid physical random-access channel occasion of a first set for $N_2$ random-access channel preamble transmissions with different transmission beams is determined after $N_1$ physical random-access channel occasions determined for the first set for $N_1$ random-access channel preamble transmissions with the same transmission beam; and a first valid physical random-access channel occasion of any other sets in the time period for $N_2$ random-access channel preamble transmissions with different transmission beams is determined after physical random-access channel occasions determined for any previous set for multiple random-access channel preamble transmissions.

Example 35. The apparatus according to example 34, wherein: a size of the sets for multiple random-access channel preamble transmissions with different transmission beams, $N_2$, is larger than a size of a size of the sets for multiple random-access channel preamble transmissions with same transmission beam, $N_1$; and the determining one or more sets of physical random-access channel occasions per time period further comprises, for individual ones of frequency resource indexes for frequency multiplexed physical random-access channel occasions and for a remaining N2-1 physical random-access channel occasions of a physical random-access channel occasion set: the remaining $N_2$-1 physical random-access channel occasions of a physical random-access channel occasion set for $N_2$ random-access channel preamble transmissions with different transmission beams use same frequency resources as, are subsequent to, and are associated with same one or more synchronization signal / physical broadcast channel (SS/PBCH) block indexes as the first valid physical random-access channel occasion of the physical random-access channel occasion set, where individual ones of the SS/PBCH block indexes are associated with same preamble indexes in all valid physical random-access channel occasions within the physical random-access channel occasion set, and are determined: before a first valid physical random-access channel occasion of a subsequent set of physical random-access channel occasions for $N_1$ random-access channel preamble transmissions with the same transmission beam, based on valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions; and after the physical random-access channel occasions determined for the subsequent set of physical random-access channel occasions for $N_1$ random-access channel preamble transmissions with the same transmission beam, based on less than $N_2$-1 valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions.

Example 36. The apparatus according to example 34, wherein: a size of the sets for multiple random-access channel preamble transmissions with different transmission beams, $N_2$, is larger than a size of the sets for multiple random-access channel preamble transmissions with same transmission beam, $N_1$; and the determining one or more sets of physical random-access channel occasions per time period further comprises, for individual ones of frequency resource indexes for frequency multiplexed physical random-access channel occasions and for a remaining N2-1 physical random-access channel occasions of a physical random-access channel occasion set: the remaining $N_2$-1 physical random-access channel occasions of a physical random-access channel occasion set for $N_2$ random-access channel preamble transmissions with different transmission beams use same frequency resources as, and are associated with same one or more synchronization signal / physical broadcast channel (SS/PBCH) block indexes as the first valid physical random-access channel occasion of the physical random-access channel occasion set, where each individual one of the SS/PBCH block indexes is associated with same preamble indexes in all valid physical random-access channel occasions within the set, and are determined as being subsequent to the first valid physical random-access channel occasion of the physical random-access channel occasion set excluding any physical random-access channel occasions in any set of physical random-access channel occasions for $N_1$ random-access channel preamble transmissions with the same transmission beam.

Example 37. The apparatus according to any one of examples 31 to 34, wherein: based on a frequency hopping flag being set for multiple random-access channel preamble transmissions with different transmission beams, performing the following: a first valid physical random-access channel occasion of a first set for $N_2$ random-access channel preamble transmissions with different transmission beams, is determined after $N_1$ physical random-access channel occasions determined for the first set for $N_1$ random-access channel preamble transmissions with the same transmission beam, and has frequency resource index given by the frequency resource index of any physical random-access channel occasion in physical random-access channel occasion sets for $N_1$ random-access channel preamble transmissions with the same transmission beam plus a value k, a first valid physical random-access channel occasion of any other sets in the time period for $N_2$ random-access channel preamble transmissions with different transmission beams has a same frequency resource index as the first valid physical random-access channel occasion of the first set for $N_2$ random-access channel preamble transmissions with different transmission beams, and is determined as follows: (i) based on a size of the sets for multiple random-access channel preamble transmissions with different transmission beams, $N_2$, is smaller than or equal to a size of the sets for multiple random-access channel preamble transmissions with same transmission beam, $N_1$, it is determined according to any one of examples 4, 5, or 6, excluding any physical random-access channel occasions frequency multiplexed with any physical random-access channel occasion in any physical random-access channel occasions set for N1 random-access channel preamble transmissions with the same transmission beam; and (i) based on the size of the sets for multiple random-access channel preamble transmissions with different transmission beams, $N_2$, is larger than the size of the sets for multiple random-access channel preamble transmissions with same transmission beam, $N_1$, it is determined according to any one of examples 34, 35, or 36; and else follow any procedure as per one of examples 31 to 36.

Example 38. The apparatus according to example 37, wherein: k=1; or k is a value provided by signaling.

As used in this application, the term "circuitry" may refer to one or more or all of the following:

(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 20. A computer-readable medium may comprise a computer-readable storage medium (e.g., memories 15, 75, and 95 or other device) that may be any media or means that can contain, store, and/or transport the instructions for use by or in connection with an instruction execution system, apparatus, or device, such as a computer. A computer-readable storage medium does not comprise propagating signals, and therefore may be considered to be non-transitory. The term "non-transitory", as used herein, is a limitation of the medium itself (i.e., tangible, not a signal) as opposed to a limitation on data storage persistency (e.g., RAM, random access memory, versus ROM, read-only memory).

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following abbreviations that may be found in the specification and/or the drawing figures are defined as follows:

| | |
|---|---|
| 5G | fifth generation |
| a.k.a. | also known as |
| AMF | access and mobility management function |
| CBRA | contention-based random access |
| DL | downlink (from network to UE) |
| E-SMLC | evolved serving mobile location center |
| FDM | Frequency division multiplex |
| GMLC | Gateway Mobile Location Center |
| eNB (or eNodeB) | evolved Node B (e.g., an LTE base station) |
| gNB (or gNodeB) | base station for 5G/NR |
| ID | identification |
| I/F | interface |
| LMF | Location Management Function |
| LTE | long term evolution |
| MME | mobility management entity |
| Msg | message |
| NF | network function |
| ng or NG | next generation |
| NR | new radio |
| NRF | Network Repository Function |
| N/W or NW | network |
| PRACH | RACH preamble |
| PUSCH | physical uplink shared channel |
| PUCCH | physical uplink control channel |
| RACH | random access channel |
| RAN | radio access network |
| Rel | release |
| RO | RACH occasion |
| RRC | radio resource control |

| Rx | receiver |
| SFN | System frame number |
| SGW | serving gateway |
| SMF | session management function |
| SS/PBCH | synchronization signal / physical broadcast channel |
| SSB | synchronization signal block, e.g., SS/PBCH block |
| TC | Time-advance command |
| TRP | transmission-reception point |
| Tx | transmitter |
| UDM | unified data management |
| UDR | unified data repository |
| UE | user equipment (e.g., a wireless, typically mobile device) |
| UL | uplink (from UE to network) |
| UPF | user plane function |
| WID | Working item description |

**Claims**

1. A method, comprising:

   based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following:
   determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period;
   selecting, by the user equipment, a set from the one or more sets of physical random-access channel occasions per time period; and
   performing, in response to selection of the set, multiple transmissions of at least one preamble for a random-access channel with different transmission beams on the selected set.

2. A method, comprising:

   based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following:

   (i) determining, by the user equipment in a cell, that the multiple transmissions of at least one preamble for a random-access channel with different transmission beams are disabled for the cell; or
   (ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period;

   selecting, by the user equipment, a set from the one or more sets of physical random-access channel occasions per time period; and
   performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

3. The method according to either claim 1 or 2, wherein the one or more sets of physical random-access channel occasions for performing multiple transmissions of at least one preamble for a random-access channel with different transmission beams are all associated with same one or more synchronization signal block indexes and wherein that at least one preamble to be transmitted is selected from a configured preamble set associated with a selected one of the one or more synchronization signal block indexes.

4. An apparatus, comprising means for performing:

based on determining, at a user equipment in a wireless network, that at least a time offset between any two consecutive first valid physical random-access channel occasions of any two consecutive sets of physical random-access channel occasions per time period is configured, wherein sets of physical random-access channel occasions are for performing multiple transmissions of at least one preamble for a random-access channel with a same transmission beam, performing at least the following:
determining one or more sets of physical random-access channel occasions per time period, wherein the one or more sets are for performing multiple transmissions of at least one preamble for a random-access channel with different transmission beams and wherein the one or more sets are different from any one or more sets for performing multiple transmissions of at least one preamble for a random-access channel with the same transmission beam in the time period;
selecting, by the user equipment, a set from the one or more sets of physical random-access channel occasions per time period; and
performing, in response to selection of the set, multiple transmissions of at least one preamble for a random-access channel with different transmission beams on the selected set.

5. An apparatus, comprising means for performing:

based on determining, at a user equipment in a wireless network, that a time offset between any two consecutive first valid physical random-access channel occasions of any two consecutive sets of physical random-access channel occasions per time period is not configured, wherein sets of physical random-access channel occasions are for performing multiple transmissions of at least one preamble for a random-access channel with same transmission beam, performing one of the following:

(i) determining, by the user equipment in a cell, that the multiple transmissions of at least one preamble for a random-access channel with different transmission beams are disabled for the cell; or
(ii) determining one or more sets of physical random-access channel occasions per time period, wherein the one or more sets are for performing multiple transmissions of at least one preamble for a random-access channel with different transmission beams and wherein individual ones of the one or more sets coincide with or are included in a set for performing multiple transmissions of at least one preamble for a random-access channel with a same transmission beam in the time period;

selecting, by the user equipment, a set from the one or more sets of physical random-access channel occasions per time period; and
performing, in response to the selection, the multiple transmissions of at least one preamble for a random-access channel with different transmission beams over the selected set, wherein the at least one preamble is selected from a configured preamble set for multiple transmissions of at least one preamble for a random-access channel with different transmission beams which is different from the configured preamble set for multiple transmissions of at least one preamble for a random-access channel with same transmission beams.

6. The apparatus according to either claim 4 or 5, wherein the one or more sets of physical random-access channel occasions for performing multiple transmissions of at least one preamble for a random-access channel with different transmission beams are all associated with same one or more synchronization signal block indexes and wherein that at least one preamble to be transmitted is selected from a configured preamble set associated with a selected one of the one or more synchronization signal block indexes.

7. The apparatus according to any one of claims 4 to 6, wherein:

a size of the sets for multiple random-access channel preamble transmissions with different transmission beams, $N_2$, is smaller than or equal to a size of the sets for multiple random-access channel preamble transmissions with same transmission beam, $N_1$; and

the determining one or more sets of physical random-access channel occasions per time period further comprises, for individual frequency resource indexes for frequency multiplexed physical random-access channel occasions:

a first valid physical random-access channel occasion of a first set for $N_2$ random-access channel preamble transmissions with different transmission beams, is determined after the $N_1$ physical random-access channel occasions determined for the first set for $N_1$ random-access channel preamble transmissions with the same transmission beam; and
a first valid physical random-access channel occasion of any other sets in the time period for $N_2$ random-access channel preamble transmissions with different transmission beams, is determined after the physical random-access channel occasions determined for any previous set for multiple random-access channel preamble transmissions.

8. The apparatus according to any one of claims 4 to 6, wherein:

a size of the sets for multiple random-access channel preamble transmissions with different transmission beams, $N_2$, is smaller than or equal to a size of the sets for multiple random-access channel preamble transmissions with same transmission beam $N_1$; and
the determining one or more sets of physical random-access channel occasions per time period further comprises, for individual frequency resource indexes for frequency multiplexed physical random-access channel occasions:
a first valid physical random-access channel occasion of any given set for $N_2$ random-access channel preamble transmissions with different transmission beams is determined after $i \cdot N_2$ physical random-access channel occasions determined for previous sets for $N_2$ random-access channel preamble transmissions with different transmission beams after the previous set for $N_1$ random-access channel preamble transmissions with the same

$$0 \le i \le \frac{\mathrm{T} - \mathrm{N}_1}{N_2} - 1$$

transmission beam, where       , where $T$ is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of the first of two physical random-access channel occasion sets, where each individual one of the one or more SS/PBCH block indexes is associated with same preambles in all the T valid physical random-access channel occasions.

9. The apparatus according to any of claims 7 or 8, wherein:

a size of the sets for multiple random-access channel preamble transmissions with different transmission beams, $N_2$, is smaller than or equal to a size of the sets for multiple random-access channel preamble transmissions with same transmission beam, $N_1$;
the determining one or more sets of physical random-access channel occasions per time period further comprises, for individual frequency resource indexes for frequency multiplexed physical random-access channel occasions:
based on an indication to reuse a time offset configuration for multiple random-access channel preamble transmissions with a same transmission beam for the multiple random-access channel preamble transmissions with different transmission beams is not provided, following a procedure as per one of claims 7 or 8, else

a first valid physical random-access channel occasion of the first set for $N_2$ random-access channel preamble transmissions with different transmission beams is determined after the physical random-access channel occasions determined for the first set for $N_1$ random-access channel preamble transmissions with the same transmission beam; and
a first valid physical random-access channel occasion of any other sets in the time period for $N_2$ random-access channel preamble transmissions with different transmission beams is after T consecutive valid physical random-access channel occasions in time from the first valid physical random-access channel occasion corresponding to the previous set for $N_2$ random-access channel preamble transmissions with different transmission beams, where T is the time offset that separates starting physical random-access channel occasions of two consecutive physical random-access channel occasion sets for a same frequency resource index of frequency multiplexed physical random-access channel occasion and is expressed as a number of valid physical random-access channel occasions associated with same one or more synchronization signal / physical broadcast channel (SS/PBCH) block indexes as the starting physical random-access channel occasion of a first of two physical random-access channel occasion sets, where an individual ones of the SS/PBCH block indexes is associated with same preambles.

10. The apparatus according to any one of claims 4 to 6, wherein:

a size of the sets for multiple random-access channel preamble transmissions with different transmission beams, $N_2$, is larger than a size of the sets for multiple random-access channel preamble transmissions with same transmission beam, $N_1$;

the determining one or more sets of physical random-access channel occasions per time period further comprises, for individual frequency resource indexes for frequency multiplexed physical random-access channel occasions and for a first valid physical random-access channel occasion of a physical random-access channel occasion set:

a first valid physical random-access channel occasion of a first set for $N_2$ random-access channel preamble transmissions with different transmission beams is determined after $N_1$ physical random-access channel occasions determined for the first set for $N_1$ random-access channel preamble transmissions with the same transmission beam; and

a first valid physical random-access channel occasion of any other sets in the time period for $N_2$ random-access channel preamble transmissions with different transmission beams is determined after physical random-access channel occasions determined for any previous set for multiple random-access channel preamble transmissions.

11. The apparatus according to claim 10, wherein:

a size of the sets for multiple random-access channel preamble transmissions with different transmission beams, $N_2$, is larger than a size of a size of the sets for multiple random-access channel preamble transmissions with same transmission beam, $N_1$; and

the determining one or more sets of physical random-access channel occasions per time period further comprises, for individual ones of frequency resource indexes for frequency multiplexed physical random-access channel occasions and for a remaining $N_2$-1 physical random-access channel occasions of a physical random-access channel occasion set:

the remaining $N_2$ - 1 physical random-access channel occasions of a physical random-access channel occasion set for $N_2$ random-access channel preamble transmissions with different transmission beams use same frequency resources as, are subsequent to, and are associated with same one or more synchronization signal / physical broadcast channel (SS/PBCH) block indexes as the first valid physical random-access channel occasion of the physical random-access channel occasion set, where individual ones of the SS/PBCH block indexes are associated with same preamble indexes in all valid physical random-access channel occasions within the physical random-access channel occasion set, and are determined:

before a first valid physical random-access channel occasion of a subsequent set of physical random-access channel occasions for $N_1$ random-access channel preamble transmissions with the same transmission beam, based on valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions; and

after the physical random-access channel occasions determined for the subsequent set of physical random-access channel occasions for $N_1$ random-access channel preamble transmissions with the same transmission beam, based on less than $N_2$ - 1 valid random-access channel preamble physical random-access channel occasions exist between the first valid physical random-access channel occasion of the physical random-access channel occasion set for $N_2$ random-access channel preamble transmissions with different transmission beams and the first valid physical random-access channel occasion of the subsequent set of physical random-access channel occasions for $N_1$ random-access channel preamble transmissions.

**12.** The apparatus according to claim 10, wherein:

a size of the sets for multiple random-access channel preamble transmissions with different transmission beams, $N_2$, is larger than a size of the sets for multiple random-access channel preamble transmissions with same transmission beam, $N_1$; and
the determining one or more sets of physical random-access channel occasions per time period further comprises, for individual ones of frequency resource indexes for frequency multiplexed physical random-access channel occasions and for a remaining $N_2$-1 physical random-access channel occasions of a physical random-access channel occasion set:
the remaining $N_2 - 1$ physical random-access channel occasions of a physical random-access channel occasion set for $N_2$ random-access channel preamble transmissions with different transmission beams use same frequency resources as, and are associated with same one or more synchronization signal / physical broadcast channel (SS/PBCH) block indexes as the first valid physical random-access channel occasion of the physical random-access channel occasion set, where each individual one of the SS/PBCH block indexes is associated with same preamble indexes in all valid physical random-access channel occasions within the set, and are determined as being subsequent to the first valid physical random-access channel occasion of the physical random-access channel occasion set excluding any physical random-access channel occasions in any set of physical random-access channel occasions for $N_1$ random-access channel preamble transmissions with the same transmission beam.

**13.** The apparatus according to any one of claims 7 to 12, wherein:

based on a frequency hopping flag being set for multiple random-access channel preamble transmissions with different transmission beams, performing the following:

a first valid physical random-access channel occasion of a first set for $N_2$ random-access channel preamble transmissions with different transmission beams, is determined after $N_1$ physical random-access channel occasions determined for the first set for $N_1$ random-access channel preamble transmissions with the same transmission beam, and has frequency resource index given by the frequency resource index of any physical random-access channel occasion in physical random-access channel occasion sets for $N_1$ random-access channel preamble transmissions with the same transmission beam plus a value k,
a first valid physical random-access channel occasion of any other sets in the time period for $N_2$ random-access channel preamble transmissions with different transmission beams has a same frequency resource index as the first valid physical random-access channel occasion of the first set for $N_2$ random-access channel preamble transmissions with different transmission beams, and is determined as follows:

(i) based on a size of the sets for multiple random-access channel preamble transmissions with different transmission beams, $N_2$, is smaller than or equal to a size of the sets for multiple random-access channel preamble transmissions with same transmission beam, $N_1$, it is determined according to any one of claims 4, 5, or 6, excluding any physical random-access channel occasions frequency multiplexed with any physical random-access channel occasion in any physical random-access channel occasions set for $N_1$ random-access channel preamble transmissions with the same transmission beam; and
(i) based on the size of the sets for multiple random-access channel preamble transmissions with different transmission beams, $N_2$, is larger than the size of the sets for multiple random-access channel preamble transmissions with same transmission beam, $N_1$, it is determined according to any one of claims 10, 11, or 12; and

else follow any procedure as per one of claims 7 to 12.

**14.** The apparatus according to claim 13, wherein:

k=1; or
k is a value provided by signaling.

**15.** A system, comprising: a first apparatus of any of claims 4 to 14, and a second apparatus connected through a radio interface to the first apparatus, the second apparatus comprising means for performing: sending configuration comprising time offset configuration to the first apparatus, the time offset configuration comprising indication of the time offset.

**FIG. 1**

**FIG. 3**

| PRACH Configuration Index | Preamble format | $n_{SFN} \bmod x = y$ | | Subframe number | Starting symbol | Number of PRACH slots within a subframe | $N_t^{RA,slot}$, number of time-domain PRACH occasions within a PRACH slot | $N_{dur}^{RA}$, PRACH duration |
|---|---|---|---|---|---|---|---|---|
| | | $x$ | $y$ | | | | | |
| 251 | C2 | 1 | 0 | 2,7 | 0 | 2 | 2 | 6 |

210

$$\{0,1\} \qquad \{0,1\}$$

$$\boxed{l} = l_0 + 14 n_{slot}^{RA} + n_t^{RA} N_{dur}^{RA}$$

220

$$= 0 \ + 14\times\{0,1\} + \{0,1\}\times6$$

$$= \{0, 6, 14, 20\}$$

230-1    SFN 0    SFN 1    230-2

Frame: 10ms    Frame: 10ms

| 0 | 1 | 2 | 3 | 4 | 5 | 6 | 7 | 8 | 9 | 10 | 0 | 1 | 2 | 3 | 4 | 5 | 6 | 7 | 8 | 9 | 10 |

240-0    240-2    240-7    240-10

250-6    250-14    250-20

| 0 | 1 | 2 | 3 | 4 | 5 | 6 | 7 | 8 | 9 | 10 | 11 | 12 | 13 | 14 | 15 | 16 | 14 | 18 | 19 | 20 | 21 | 22 | 23 | 24 | 25 | 26 | 27 |

250-0

Subframe: 1ms

Slot: 0.5ms    250-27

PRACH SCS = 30 kHz

250-14

**FIG. 2**

FIG. 4

505: The UE receives, from the network, RACH configuration, which may include time offset configuration for multiple PRACH transmissions with a same Tx beam, for which a time offset separates starting ROs of any two consecutive RO sets for the same $n_{RA}$ and is expressed as a number of valid ROs associated with same SS/PBCH block index(es) as the starting RO of the first of the two RO sets, where each SS/PBCH block index is associated with same preambles, and is to be used by the UE to determine location of the RO groups for multiple PRACH transmissions with different Tx beams (as a function of their starting ROs, which are separated by a number of valid ROs equal to the time offset)

510: The UE performs, using at least the time offset(s), checking to determine whether at least one set of ROs per time period is provided, for performing multiple PRACH transmissions with different Tx beams

520: a. If time offset configuration is not provided by network, then one of the following two occurrences occurs:

530: i. The UE determines that the multiple PRACH transmissions with different Tx beams are disabled for this cell

540: ii. Determine, in the time period, at least one set of ROs for performing multiple PRACH transmissions with different Tx beams, wherein individual ones of the one or more sets coincide with or are included in a set for performing PRACH transmissions with same Tx beam, wherein a preamble set different from the one used for the latter is used for the former

550: The UE performs the multiple PRACH transmissions with different Tx beams in the determined at least one set of ROs per time period

560: b. If time offset configuration is provided by network, then the following occurs:

570: The UE determines, in the time period, at least one set of ROs for performing multiple PRACH transmissions with different Tx beams, wherein the at least one set is different from any one or more sets for performing multiple transmissions of at least one preamble for a random-access channel with same transmission beam in the time period

580: The UE performs the multiple PRACH transmissions with different Tx beams in the determined at least one set of ROs per time period

560
See also FIGS. 9, 10, and 11

**FIG. 5**

610: Configure a time offset for introducing a number of valid ROs between two consecutive first valid ROs (starting ROs) of an RO set for performing multiple PRACH transmissions with different Tx beams (in a time period) larger than the number of ROs in an RO set, without an explicit configuration of the time offset itself, and where the valid ROs between two consecutive starting ROs of an RO set are associated with same SS/PBCH block index(es) as the starting RO of the first of the two RO sets, with each SS/PBCH block index being associated with same preambles

620

See also FIGS. 12 and 13

## FIG. 6

710: Determine sets of ROs for performing multiple PRACH transmissions with different Tx beams and comprising non-consecutive ROs

720

See also FIGS. 14 and 15

## FIG. 7

810: Configure a frequency offset between sets of ROs for (e.g., legacy) multiple PRACH transmissions and sets of ROs for multiple PRACH transmissions with different TX beams

830

See also FIGS. 16, 17, 18, and 19

815: The frequency offset allows to determine the sets of ROs consisting of ROs with a specific frequency domain index (and not simply for all possible indices), but not overlapped in time with (e.g., legacy) sets of ROs

820: The frequency offset can also be used in conjunction with the novel method as per "3" (FIG. 7), by means of which sets of ROs consisting of non-consecutive ROs can be determined, where ROs of the set have a specific frequency domain index

## FIG. 8

910: The size of the sets for multiple PRACH transmissions with different Tx beams (i.e., $N_2$) is smaller than or equal to the size of the same Tx beam counterpart (i.e., $N_1$) (alt: larger than) (e.g., the "a size of a same transmission beam counterpart" is meant to be a compact version of "a size of the sets for multiple random-access channel preamble transmissions with same transmission beam")

913: The first valid PRACH occasion of an RO set for multiple PRACH transmissions with different Tx beams according to this example is determined according to one of the procedures below, whereas the remaining $N_2$-1 ROs of an RO set for $N_2$ PRACH transmissions with different Tx beams are consecutive in time with respect to, use same frequency resources as, and are associated with same one or more synchronization signal block (SSB) index(es) as the first valid PRACH occasion of the RO set, and each synchronization signal block index is associated with same preamble indexes in all valid PRACH occasions within the set

915: For each frequency resource index for frequency multiplexed PRACH occasions:
The first valid PRACH occasion of the first set for $N_2$ PRACH transmissions with different Tx beams, is determined after the $N_1$ ROs determined for the first set for $N_1$ PRACH transmissions with the same Tx beam.
The first valid PRACH occasion of subsequent sets for $N_2$ PRACH transmissions with different Tx beams, if any, is determined after the ROs determined for any previous set for multiple PRACH transmissions

920: For each frequency resource index for frequency multiplexed PRACH occasions:
The first valid PRACH occasion of any set for PRACH transmissions with different Tx beams, if any, is determined after the $i$ $N_2$ ROs determined for the previous sets for PRACH transmissions with different Tx beams, if any, after the previous set for PRACH transmissions with the same Tx beam, where

$$0 \leq i \leq \frac{\text{TimeOffsetBetweenStartingRO} - N_1}{N_2} - 1$$

**FIG. 9**

FIG. 10

FIG. 11

1210: the size of the sets for multiple PRACH transmissions with different Tx beams (i.e., $N_2$) is smaller than or equal to the size of the same Tx beam counterpart (i.e., $N_1$) (alt: larger than)

1213: The first valid PRACH occasion of an RO set for multiple PRACH transmissions with different Tx beams according to this embodiment is determined according to the procedure below, whereas the remaining $N_2$-1 ROs of an RO set for $N_2$ PRACH transmissions with different Tx beams are consecutive in time with respect to, use same frequency resources as, and are associated with same one or more SS/PBCH block index(es) as the first valid PRACH occasion of the set, and each SS/PBCH block index is associated with same preamble indexes in all valid PRACH occasions within the set

1215: For
each frequency resource index for frequency multiplexed PRACH occasions:
If
the indication to reuse Rel-18 time offset configuration for the multiple PRACH transmissions with different Tx beams is not provided, follow any procedure as per embodiment A
Else,
1) The first valid PRACH occasion of the first set for $N_2$ PRACH transmissions with different Tx beams, is determined after the ROs determined for the first set for $N_1$ PRACH transmissions with the same Tx beam;
2) The first valid PRACH occasion of subsequent sets for $N_2$ PRACH transmissions with different Tx beams, if any, is after TimeOffsetBetweenStartingRO valid ROs associated with same SS/PBCH block index(es) as the starting RO of the previous RO set for multiple PRACH transmissions with different Tx beams, where each SS/PBCH block index is associated with same preambles

**FIG. 12**

1390: an additional flag is provided to the UE for the latter to interpret the time offset as a second identical time offset 430-2 implicitly configured by the network for the different Tx beam case of 12

**FIG. 13**

EP 4 572 515 A1

1410: The size of the sets for multiple PRACH transmissions with different Tx beams is larger than the same Tx beam counterpart (alt: smaller than or equal to)

1413: The first valid PRACH occasion of an RO set for multiple PRACH transmissions with different Tx beams according to this embodiment is determined according to procedure below

1415: Procedure for first valid RO of an RO set, for each frequency resource index for frequency multiplexed PRACH occasions:
The first valid PRACH occasion of the first set for $N_2$ PRACH transmissions with different Tx beams, is determined after the $N_1$ ROs determined for the first set for $N_1$ PRACH transmissions with the same Tx beam;
The first valid PRACH occasion of subsequent sets for $N_2$ PRACH transmissions with different Tx beams, if any, is determined after the ROs determined for any previous set for multiple PRACH transmissions

1420: Procedure for the remaining $N_2$-1 ROs of an RO set, for each frequency resource index for frequency multiplexed PRACH occasions:
The remaining $N_2$-1 ROs of an RO set for $N_2$ PRACH transmissions with different Tx beams use same frequency resources as, are subsequent to, and are associated with same one or more SS/PBCH block index(es) as the first valid PRACH occasion of the RO set, where each SS/PBCH block index is associated with same preamble indexes in all valid PRACH occasions within the set, and are determined:
Before the first valid PRACH occasion of the subsequent set of ROs for $N_1$ PRACH transmissions with the same Tx beam, if valid PRACH occasions exist between the first valid PRACH occasion of the RO set for $N_2$ PRACH transmissions with different Tx beams and the first valid PRACH occasion of the subsequent set of ROs for $N_1$ PRACH transmissions.
After the PRACH occasions determined for the subsequent set of ROs for $N_1$ PRACH transmissions with the same Tx beam, if $N_2$-1 valid PRACH occasions exist between the first valid PRACH occasion of the RO set for $N_2$ PRACH transmissions with different Tx beams and the first valid PRACH occasion of the subsequent set of ROs for $N_1$ PRACH transmissions

1430: Alternative procedure for the remaining $N_2$-1 ROs of an RO set, for each frequency resource index for frequency multiplexed PRACH occasions:

The remaining $N_2$-1 ROs of an RO set for $N_2$ PRACH transmissions with different Tx beams use same frequency resources as, and are associated with same one or more SS/PBCH block index(es) as the first valid PRACH occasion of the RO set, where each SS/PBCH block index is associated with same preamble indexes in all valid PRACH occasions within the set, and are determined as subsequent to the first valid PRACH occasion of the RO set excluding any ROs in any set of ROs for $N_1$ PRACH transmissions with the same Tx beam

**FIG. 14**

FIG. 15

1610: The size of the sets for multiple PRACH transmissions with different Tx beams (i.e., $N_2$) can be smaller than or equal to the size of the same Tx beam counterpart (i.e., $N_1$), in which case this embodiment may converge to embodiment A or B according to the procedure below, or larger, in which case the embodiment may converge to embodiment C

1613: The first valid PRACH occasion of an RO set for multiple PRACH transmissions with different Tx beams according to this embodiment is determined according to the procedure below

1615:
If
    frequency hopping (also referred to as offset) flag is set for multiple PRACH transmissions with different Tx beams
    1) The first valid PRACH occasion of the first set for $N_2$ PRACH transmissions with different Tx beams, is determined after the $N_1$ ROs determined for the first set for $N_1$ PRACH transmissions with the same Tx beam, and has frequency resource index given by the frequency resource index of any RO in RO sets for $N_1$ PRACH transmissions with the same Tx beam + k, wherein
        [default behavior] k=1, or
        [if signaling is provided] k = value provided by the optional signaling.
    2) The first valid PRACH occasion of subsequent sets for $N_2$ PRACH transmissions with different Tx beams, if any, has the same frequency resource index as the first valid PRACH occasion of the first set for $N_2$ PRACH transmissions with different Tx beams, and is determined according to embodiment A or B, excluding any ROs frequency multiplexed with any RO in any ROs set for $N_1$ PRACH transmissions with the same Tx beam, or according to Embodiment C

Else
    Follow any procedure as per embodiment A, B or C

1620: The remaining $N_2$-1 ROs of an RO set for $N_2$ PRACH transmissions with different Tx beams use same frequency resources as, and are associated with same one or more SS/PBCH block index(es) as the first valid PRACH occasion of the RO set, where each SS/PBCH block index is associated with same preamble indexes in all valid PRACH occasions within the set, and are determined as subsequent to the first valid PRACH occasion of the RO set excluding any ROs in any set of ROs for $N_1$ PRACH transmissions with the same Tx beam

1630: The remaining $N_2$-1 ROs of an RO set for $N_2$ PRACH transmissions with different Tx beams according to this embodiment are determined according to embodiment A, B or C, depending on whether the first valid PRACH occasion of the set has been determined according to the logic of embodiment A, B or C, with the constraints given by the presence of at least the frequency offset flag as per this embodiment

## FIG. 16

410

430

430

1520

Time period

Time offset configured by network for same Tx beam case = 4

Time offset configured by network for same Tx beam case = 4

First/second/third set of starting ROs for same Tx beam case

1760-1

1760-2

frequency

1520-1

1530-1

1520-2

1530-2

1520-3

1530

First/second set of starting ROs for different Tx beams case

time

RO set for 2 preamble repetitions with different Tx beams (with ROs mapped with SSB #0)

RO set for 2 preamble repetitions with different Tx beams (with ROs mapped with SSB #0)

| SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 |
| SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 | SSB #1 | SSB #3 |
| SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 |
| SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 | SSB #0 | SSB #2 |

RO set for 2 preamble repetitions with same Tx beam (with ROs mapped with SSB #0)

frequency offset for determining starting Ros in case of different tx beams= 1

RO set for 2 preamble repetitions with same Tx beam (with ROs mapped with SSB #0)

RO set for 2 preamble repetitions with same Tx beam (with ROs mapped with SSB #0)

1750-1

1780

1750-2

1750-3

**FIG. 17**

44

1890: an additional flag is provided to the UE for the latter to interpret the time offset as a second identical time offset 1830-2 implicitly configured by the network for the different Tx beam case of 6

FIG. 18

**FIG. 19**

FIG. 20

Europäisches
Patentamt

European
Patent Office

Office européen
des brevets

## EUROPEAN SEARCH REPORT

**Application Number**

EP 23 21 5711

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATRICK MERIAS ET AL: "FL Summary #5 on remaining issues for PRACH coverage enhancements", 3GPP DRAFT; R1-2312677; TYPE DISCUSSION; NR_COV_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Chicago, US; 20231113 – 20231117 19 November 2023 (2023-11-19), XP052548519, Retrieved from the Internet: URL:https://www.3gpp.org/ftp/TSG_RAN/WG1_RL1/TSGR1_115/Docs/R1-2312677.zip R1-2312677.docx [retrieved on 2023-11-19] * the whole document * | 1-15 | INV. H04W74/0833 ADD. H04L5/00 H04B7/06 |
| | ----- | | |
| | -/-- | | |

**TECHNICAL FIELDS SEARCHED (IPC)**

H04W
H04B
H04L

The present search report has been drawn up for all claims

| Place of search | Date of completion of the search | Examiner |
|---|---|---|
| The Hague | 6 May 2024 | Goedhart, André |

EPO FORM 1503 03.82 (P04C01)

| | Europäisches Patentamt European Patent Office Office européen des brevets | **EUROPEAN SEARCH REPORT** | Application Number EP 23 21 5711 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | "3rd Generation Partnership Project; Technical Specification Group Radio Access Network; NR; Physical layer procedures for control (Release 18)", 3GPP DRAFT; DRAFT38213-I00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 22 September 2023 (2023-09-22), XP052531889, Retrieved from the Internet: URL:https://ftp.3gpp.org/tsg_ran/WG1_RL1/D RAFT/Draft_versions/Draft38213-i00.zip Draft38213-i00.docx [retrieved on 2023-09-22] * section 8.1 * ----- | 1-15 | |
| A,D | "3rd Generation Partnership Project; Technical Specification Group Radio Access Network; NR; Physical channels and modulation (Release 18)", 3GPP DRAFT; 38211-I00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 28 September 2023 (2023-09-28), XP052532547, Retrieved from the Internet: URL:https://ftp.3gpp.org/tsg_ran/WG1_RL1/D RAFT/Clean_versions/38211-i00.zip 38211-i00.docx [retrieved on 2023-09-28] * section 5.3.2 * * section 6.3.3.2 * ----- | 1-15 | TECHNICAL FIELDS SEARCHED (IPC) |

The present search report has been drawn up for all claims

| Place of search | Date of completion of the search | Examiner |
|---|---|---|
| The Hague | 6 May 2024 | Goedhart, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2